# EUROPEAN PATENT APPLICATION

(11) **EP 4 436 020 A1**
(43) Date of publication of application: **25.09.2024**
(21) Application number: 23216394.9
(22) Date of filing: 13.12.2023
(51) Int. Cl.: H02M 1/00, H02M 5/458, H02M 7/483

(54) **AC-DC-AC CONVERTER FOR MOTOR DRIVE APPLICATIONS WITH HMMC RUNNING AS A 3L/2L MOTOR DRIVE DURING STARTUP**

(30) Priority: 23.03.2023 US 202318188725
(71) Applicant: GE Energy Power Conversion Technology Limited, Rugby, Warwickshire CV21 1BD (GB)
(72) Inventor: ZHOU, Zhi, NISKAYUNA 123091027 (US); SIALA, Sami, 91140 VILLEBON SUR YVETTE (FR); BASIC, Duro, 91140 VILLEBON SUR YVETTE (FR); MANKEVICH, Steven, FINDLAY TOWNSHIP 15126 (US)
(74) Representative: Casalonga

(57) **Abstract**

AC-DC-AC converter (1) for delivering power to an electric motor from a power source (2) is presented. The AC-DC-AC converter (1) comprises a front-end converter (10) and a motor-end converter (11) connected through a DC link (4), the DC link voltage being generated and controlled by the front-end converter. The motor-end converter comprises at least two submodules, wherein at least one submodule is commanded as a derated submodule. The motor-end converter is commanded in order to generate an AC voltage equal to one of at least two voltages among a first voltage, a second voltage, a third voltage, a fourth voltage and a fifth voltage out of the DC link voltage and according to the voltage required by the motor.

## Description

### FIELD OF THE INVENTION

The invention relates to modular multilevel converters and more precisely, to such modular multilevel converters powering up an electric motor, notably during startup.

### BACKGROUND OF THE INVENTION

MMC-based motor drive is capable of powering and driving different kind of motors in an efficient manner. However, such motor drives present issues when a large constant torque has to be generated, in particular during motor startup. Because of this challenge, MMC-based motor drive has been generally limited to low torque applications with low torque requirement at startup, like fans or pumps.

Prior art "Review on low-frequency ripple suppression methods for MMCs for medium-voltage drive applications," IET Power Electron., 2018, Vol. 11 Issue 15, pp. 2403-2414 describes the challenges of an MMC-based motor drive for low frequency operation during motor startup. One of those challenges resides in the voltage ripple appearing in the MMC submodules.

The submodule (SM) capacitor voltage ripple is proportional to the DC link voltage and inversely proportional to the motor frequency or speed.

During motor startup, the frequency / speed is low while the motor torque is constant. If the DC link voltage remains or is the same as the voltage in steady state operation, the voltage ripple becomes large and can't be tolerated during startup.

In order to reduce the voltage ripple during motor startup, a number of methods have been reviewed and summarized in prior arts, including high frequency harmonics injections and variable DC link voltage. The harmonics injections are usually complicated with limited benefit. The variable DC link voltage method is, however, more effective and relatively easier to implement with a right topology.

In prior arts, the variable DC link voltage was not generated by the front-end converter, it was rather accomplished by adding an extra external DC chopper at the DC link in line with the motor-end and front-end converters. A particular interest of this invention is that if the DC link voltage Vdc is adjusted with respect to frequency to maintain a constant ratio of Vdc/f, the voltage ripple will be kept low and constant. This is especially important in low frequency operation such as a motor startup, overcoming the issue, challenges and limitations of the traditional MMC for motor drive applications.

Despite the solution for indirect AC-DC-AC conversion for motor drive applications provided by prior arts, there is a need for an improved alternative in terms of performance and cost. There is also a need for optimized topologies of both the front-end and the motor-end converters being able to satisfy both steady state and startup operation.

### SUMMARY OF THE INVENTION

An object of the invention is a method for controlling an AC-DC-AC converter for delivering power to an electric motor from a power source, the AC-DC-AC converter comprising a front-end converter and a motor-end converter connected through a DC link, the front-end converter operating so that the DC link voltage is constant, the front-end converter is a hybrid modular multilevel rectifier, the motor-end converter being a hybrid modular multilevel converter or a modular multilevel converter, the motor-end converter comprising at least two submodules a submodule being a half bridge submodule or a full bridge submodule, a half bridge submodule comprising a first connection connected to a second end of a first controllable switch and to a first end of a second controllable switch, a second connection connected to the second end of the second controllable switch, a capacitor connected on one hand to the first end of the first controllable switch and on another hand to both the second connection and the second end of the second controllable switch, a full bridge submodule comprising a first connection connected to a second end of a first controllable switch and to a first end of a second controllable switch, a second connection connected to a second end of a third controllable switch and to a first end of a fourth controllable switch, a capacitor being connected on one hand to both first ends of the first controllable switch and third controllable switch, and on another hand to both second ends of the second controllable switch and fourth controllable switch, wherein it comprises the following steps in order to control the AC-DC-AC converter in a 3L ANPC mode when the motor-end converter is a hybrid modular multilevel converter or in a 2L mode when the motor-end converter is a hybrid modular multilevel converter or a modular multilevel converter:
a. controlling the modular multilevel converter in order to generate an AC voltage equal to one of at least two voltages among a first voltage, a second voltage, a third voltage, a fourth voltage and a fifth voltage according to the voltage required by the motor, and
b. in order to generate an AC voltage, forming a commutation path connecting a DC connection to the AC connection, commanding at least one submodule of the motor-end converter comprised in said commutation path to operate as a derated submodule,
c. in order to have a full-bridge submodule controlled as a derated submodule, commanding the second controllable switch and the fourth controllable switch to be non-conducting, and commanding the first controllable switch and the third controllable switch to be conducting, or commanding the first controllable switch and the third controllable switch to be non-conducting, and commanding the second controllable switch and the fourth controllable switch to be conducting,
d. in order to have a half-bridge submodule controlled to be conducting as a derated submodule, commanding the first controllable switch to be non-conducting and commanding the second controllable switch to be conducting.

Another commutation path connecting a DC connection to the AC connection, or a commutation path connecting two DC connections can be formed in order to actively control the DC link neutral point, none of the submodules of the motor-end converter comprised in said other commutation path is commanded to operate as a derated submodule.

The hybrid modular multilevel converter can comprise at least one leg, each leg being connected to an AC connection and to three DC connections, each leg comprising at least four controllable switches of a plurality of controllable switches and two branches, a first end of a first controllable switch connected to a first DC connection, a first end of a second controllable switch connected to a second end of the first controllable switch, the second end of the second controllable switch connected to a second DC connection, a first end of a third controllable switch connected to a second end of the second controllable switch and to the second DC connection, a first end of a fourth controllable switch connected to a second end of the third controllable switch, a second end of the fourth controllable switch is connected to the third DC connection, the first branch comprising at least one submodule of a plurality of submodules connected in series, the first branch being connected by a first submodule to a second end of the first controllable switch and to a first end of the second controllable switch, the first branch being connected to the AC connection, the second branch comprising at least one submodule of a plurality of submodules connected in series, the second branch being connected by a first submodule to a second end of the third controllable switch and to a first end of the fourth controllable switch, the second branch being connected to the AC connection.

In a preferred mode of realization of the first embodiment, the submodules can be controllable switches in a full-bridge configuration for applications where the half DC link voltage is less than or equal to the peak / maximum AC phase voltage; or in a half-bridge configuration for applications where the half DC link voltage is greater than the peak / maximum AC phase voltage.

In a second embodiment, the hybrid modular multilevel converter can comprise at least one leg, each leg being connected to an AC connection and to three DC connections, each leg comprising at least two pairs of controllable switches of a plurality of pairs of controllable switches connected in series with opposite polarities, at least two controllable switches of a plurality of controllable switches connected in series, a first end of a first controllable switch of the first pair of controllable switches connected to a first DC connection, a second end of a second controllable switch of the first pair of controllable switches is connected to the second end of the first controllable switch of the first pair of controllable switches, a first end of a third controllable switch is connected to the first end of the second controllable switch of the first pair of controllable switches, the second end of the third controllable switch is connected to the AC connection, a first end of a fourth controllable switch of the second pair of controllable switches is connected to a third DC connection, a second end of a fifth controllable switch of the second pair of controllable switches is connected to a second end of the fourth controllable switch of the second pair of controllable switches, a second end of a sixth controllable switch is connected to the first end of the fifth controllable switch of the second pair of controllable switches, a first end of the sixth controllable switch is connected to the AC connection, the first branch comprising at least one submodule of a plurality of submodules connected in series, the first branch being connected by a first submodule to the first end of the second controllable switch of the first pair of controllable switches and to the first end of the third controllable switch, the first branch being connected to the second DC connection, the second branch comprising at least one submodule of a plurality of submodules connected in series, the second branch being connected by a first submodule to the first end of the fifth controllable switch of the second pair of controllable switches and to the second end of the sixth controllable switch, the second branch being connected to the second DC connection.

In a preferred mode of realization of the second embodiment, the submodules can be controllable switches in a half-bridge configuration.

In a third embodiment, the hybrid modular multilevel converter can comprise at least one leg, each leg being connected to an AC connection and to three DC connections, each leg comprises at least four controllable switches of a plurality of controllable switches and two branches, a first branch comprising at least one submodule of a plurality of submodules connected in series, the first branch being connected to the first DC connection, a first submodule of the first branch being connected to a first end of a first controllable switch and to a first end of a third controllable switch, a second branch comprising at least one submodule of a plurality of submodules connected in series, the second branch being connected to the third DC connection, a first submodule of the second branch being connected to the second end of the second controllable switch and to the second end of the fourth controllable switch, the second end of the first controllable switch and the first end of the second controllable switch being connected to the second DC connection, the second end of the third controllable switch and the first end of the fourth controllable switch being connected to the AC connection.

In a preferred mode of realization of the third embodiment, the submodules can be controllable switches in a full-bridge configuration for applications where the half DC link voltage is less than or equal to the peak / maximum AC phase voltage; or in a half-bridge configuration for applications where the half DC link voltage is greater than the peak / maximum AC phase voltage.

In a variant, an inductor can be comprised in each branch of the second and third embodiments of a hybrid modular multilevel converter, the inductor being connected between a submodule of the branch and the DC connection the branch is connected to.

In another variant, an inductor can be comprised in each branch of the first embodiment of a hybrid modular multilevel converter, the inductor being connected between a submodule of the branch and the AC connection the branch is connected to.

Other embodiments of the hybrid modular multilevel converter variants can comprise a different number of legs. In other words, in other embodiments, a hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In an embodiment, the hybrid modular multilevel converter can comprise at least one leg, each leg being connected to an AC connection and to three DC connections, each leg comprising at least four controllable switches of a plurality of controllable switches connected in series and two branches, a first end of a first controllable switch connected to a first DC connection, a first end of a second controllable switch connected to a second end of the first controllable switch, the second end of the second controllable switch connected to a second DC connection, a first end of a third controllable switch connected to a second end of the second controllable switch and to the second DC connection, a first end of a fourth controllable switch connected to a second end of the third controllable switch, a second end of the fourth controllable switch is connected to the third DC connection, the first branch comprising at least one submodule of a plurality of submodules connected in series, the first branch being connected by a first submodule to a second end of the first controllable switch and to a first end of the second controllable switch, the first branch being connected to the AC connection, the second branch comprising at least one submodule a plurality of submodules connected in series, the second branch being connected by a first submodule to a second end of the third controllable switch and to a first end of the fourth controllable switch, the second branch being connected to the AC connection.

In another embodiment, the hybrid modular multilevel converter can comprise at least one leg, each leg being connected to an AC connection and to three DC connections, each leg comprising at least two pairs of controllable switches of a plurality of pairs of controllable switches connected in series with opposite polarities and at least two controllable switches of a plurality of controllable switches connected in series, a first end of a first controllable switch of the first pair of controllable switches connected to a first DC connection, a second end of a second controllable switch of the first pair of controllable switches is connected to the second end of the first controllable switch of the first pair of controllable switches, a first end of a third controllable switch is connected to the first end of the second controllable switch of the first pair of controllable switches, the second end of the third controllable switch is connected to the AC connection, a first end of a fourth controllable switch of the second pair of controllable switches is connected to a third DC connection, a second end of a fifth controllable switch of the second pair of controllable switches is connected to a second end of the fourth controllable switch of the second pair of controllable switches, a second end of a sixth controllable switch is connected to the first end of the fifth controllable switch of the second pair of controllable switches, a first end of the sixth controllable switch is connected to the AC connection, the first branch comprising at least one submodule of a plurality of submodules connected in series, the first branch being connected by a first submodule to the first end of the second controllable switch of the first pair of controllable switches and to the first end of the third controllable switch, the first branch being connected to the second DC connection, the second branch comprising at least one submodule of a plurality of submodules connected in series, the second branch being connected by a first submodule SM to the first end of the fifth controllable switch of the second pair of controllable switches and to the second end of the sixth controllable switch, the second branch being connected to the second DC connection.

In yet another embodiment, the hybrid modular multilevel converter can comprise at least one leg, each leg being connected to an AC connection and to three DC connections, each leg comprises at least four controllable switches of a plurality of switches connected in series and two branches, a first branch comprising at least one submodule of a plurality of submodules connected in series, the first branch being connected to the first DC connection, a first submodule of the first branch being connected to a first end of a first controllable switch and to a first end of a third controllable switch, a second branch comprising at least one submodule of a plurality of submodules connected in series, the second branch being connected to the third DC connection, a first submodule of the second branch being connected to the second end of the second controllable switch and to the second end of the fourth controllable switch, the second end of the first controllable switch and the first end of the second controllable switch being connected to the second DC connection, the second end of the third controllable switch and the first end of the fourth controllable switch being connected to the AC connection.

When the AC-DC-AC converter comprises a hybrid modular multilevel converter according to the first embodiment, in order to generate an AC voltage equal to the first voltage, the first controllable switch and the third controllable switch can be commanded in a conducting ("on") state while the second controllable switch and the fourth controllable switch SW4 can be commanded in a non-conducting ("off") state.

When the AC-DC-AC converter comprises a hybrid modular multilevel converter according to the first embodiment, in order to generate an AC voltage equal to the second voltage, the second controllable switch and the third controllable switch can be commanded in a conducting ("on") state while the first controllable switch and the fourth controllable switch can be commanded in a non-conducting ("off") state.

When the AC-DC-AC converter comprises a hybrid modular multilevel converter according to the first embodiment, in order to generate an AC voltage equal to the third voltage, the second controllable switch and the fourth controllable switch can be commanded in a conducting ("on") state while the first controllable switch and the third controllable switch can be commanded in a non-conducting ("off") state.

When the AC-DC-AC converter comprises a hybrid modular multilevel converter according to the second embodiment, in order to generate an AC voltage equal to the first voltage, the first controllable switch, the second controllable switch, the third controllable switch and the sixth controllable switch can be commanded in a conducting ("on") state while the fourth controllable switch and the fifth controllable switch can be commanded in a non-conducting ("off") state.

When the AC-DC-AC converter comprises a hybrid modular multilevel converter according to the second embodiment, in order to generate an AC voltage equal to the second voltage, the first controllable switch, the second controllable switch, the fourth controllable switch and the fifth controllable switch can be commanded in a non-conducting ("off") state while the third controllable switch and the sixth controllable switch can be commanded in a conducting ("on") state.

When the AC-DC-AC converter comprises a hybrid modular multilevel converter according to the second embodiment, in order to generate an AC voltage equal to the third voltage, the third controllable switch, the fourth controllable switch, the fifth controllable switch and the sixth controllable switch can be commanded in a conducting ("on") state while the first controllable switch and the second controllable switch can be commanded in a non-conducting ("off") state.

When the AC-DC-AC converter comprises a hybrid modular multilevel converter according to the second embodiment, in order to generate an AC voltage equal to the first voltage, the first controllable switch, the second controllable switch, the third controllable switch, the fourth controllable switch and the fifth controllable switch can be commanded in a conducting ("on") state while the sixth controllable switch can be commanded in a non-conducting ("off") state.

When the AC-DC-AC converter comprises a hybrid modular multilevel converter according to the second embodiment, in order to generate an AC voltage equal to the third voltage, the first controllable switch, the second controllable switch, the fourth controllable switch, the fifth controllable switch and the sixth controllable switch can be commanded in a conducting ("on") state while the third controllable switch can be commanded in a non-conducting ("off") state.

When the AC-DC-AC converter comprises a hybrid modular multilevel converter according to the third embodiment, in order to generate an AC voltage equal to the first voltage, the second controllable switch and the third controllable switch can be commanded in a conducting ("on") state while the first controllable switch and the fourth controllable switch can be commanded in a non-conducting ("off") state.

When the AC-DC-AC converter comprises a hybrid modular multilevel converter according to the third embodiment, in order to generate an AC voltage equal to the second voltage, the first controllable switch, the second controllable switch, the third controllable switch and the fourth controllable switch can be commanded in a conducting ("on") state.

When the AC-DC-AC converter comprises a hybrid modular multilevel converter according to the third embodiment, in order to generate an AC voltage equal to the third voltage, the first controllable switch and the fourth controllable switch can be commanded in a conducting ("on") state while the second controllable switch and the third controllable switch can be commanded in a non-conducting ("off") state.

The modular multilevel converter can comprise at least one leg connected to an AC connection and to two DC connections of an MMC-specific DC link, each leg comprises a first branch and a second branch, each branch comprising at least one submodule of a plurality of submodules in series with an inductor, each branch being connected to the AC connection through the inductor and to the DC connection through a submodule. The method can comprise the following steps, in order to generate an AC voltage equal to the fourth voltage, the MMC submodules comprised in the first branch are commanded in a conducting ("on") state while the submodules comprised in the second branch are commanded in a non-conducting ("off") state.

The modular multilevel converter can comprise at least one leg connected to an AC connection and to two DC connections of an MMC-specific DC link, each leg comprises a first branch and a second branch, each branch comprising at least one submodule of a plurality of submodules in series with an inductor, each branch being connected to the AC connection through the inductor and to the DC connection through a submodule. The method can comprise the following steps, in order to generate an AC voltage equal to the fifth voltage, the submodules comprised in the second branch are commanded in a conducting ("on") state while the submodules comprised in the first branch are commanded in a non-conducting ("off") state.

Additional advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description are to be regarded as illustrative in nature, and not as restrictive.

### BRIEF DESCRIPTION OF THE DRAWINGS

The present invention is illustrated by way of example, and not by way of limitation, in the figures of the accompanying drawings and in which like reference numerals refer to similar elements and in which:
- FIG. 1 illustrates an embodiment of the invention employing a hybrid modular multilevel rectifier (HMMR) as a front-end converter and a hybrid modular multilevel converter (HMMC) as a motor-end converter,
- FIG. 2 illustrates a first hybrid modular multilevel rectifier variant,
- FIG. 3 illustrates a second hybrid modular multilevel rectifier variant,
- FIG. 4 illustrates a third hybrid modular multilevel rectifier variant,
- FIG. 5 illustrates a first hybrid modular multilevel converter variant,
- FIG. 6 illustrates a second hybrid modular multilevel converter variant,
- FIG. 7 illustrates a third hybrid modular multilevel converter variant,
- FIG. 8 illustrates a modular multilevel converter,
- FIG. 9 illustrates a switching module comprising a half-bridge submodule variant with controllable switches,
- FIG. 10 illustrates a switching module comprising a full-bridge submodule variant with controllable switches
- FIG. 11 illustrates a controllable switch based on a bipolar transistor,
- FIG. 12 illustrates a controllable switch based on a MOSFET transistor,
- FIG. 13 illustrates a controllable switch based on a siliconbased rectifier,
- FIG. 14 illustrates a controllable switch based on two siliconbased rectifiers,
- FIG. 15 illustrates a commutation path within a derated half bridge switching module for a single switch function of hybrid modular multilevel converter variant in a 2L mode/3L ANPC mode,
- FIG. 16 illustrates a first commutation path within a derated full bridge switching module for a single switch function of hybrid modular multilevel converter variant in a 2L mode/3L ANPC mode,
- FIG. 17 illustrates a second commutation path within a derated full bridge switching module for a single switch function of hybrid modular multilevel converter variant in a 2L mode/3L ANPC mode,
   FIG. 18 illustrates the commutation paths in a first hybrid modular multilevel converter variant employed as a motor-end converter and operating at a first voltage in a three-level ANPC mode,
- FIG. 19 illustrates the commutation paths in a first hybrid modular multilevel converter variant employed as a motor-end converter and operating at a second voltage in a three-level ANPC mode,
- FIG. 20 illustrates the commutation paths in a first hybrid modular multilevel converter variant employed as a motor-end converter and operating at a third voltage in a three-level ANPC mode,
- FIG. 21 and FIG. 22 illustrate the commutation paths in a first hybrid modular multilevel converter variant employed as a motor-end converter and operating at a first or third voltage in a two-level mode,
- FIG. 23, FIG. 24, and FIG. 25 illustrate a first set of the commutation paths in a second hybrid modular multilevel converter variant employed as a motor-end converter and operating at a first, second, and third voltages respectively in a three-level ANPC mode,
- FIG. 26, FIG. 27, and FIG. 28 illustrate a second set of the commutation paths in a second hybrid modular multilevel converter variant employed as a motor-end converter and operating at a first, second, and third voltages respectively in a three-level ANPC mode,
- FIG. 29 and FIG. 30 illustrate a first set of the commutation paths in a second hybrid modular multilevel converter variant employed as a motor-end converter and operating at a first or third voltage in a two-level mode,
- FIG. 31 and FIG. 32 illustrate a second set of the commutation paths in a second hybrid modular multilevel converter variant employed as a motor-end converter and operating at a first or third voltage in a two-level mode,
- FIG. 33, FIG. 34, and FIG. 35 illustrate the commutation paths in a third hybrid modular multilevel converter variant employed as a motor-end converter and operating at a first, second, and third voltages respectively in a three-level ANPC mode,
- FIG. 36 and FIG. 37 illustrate the commutation paths in a third hybrid modular multilevel converter variant employed as a motor-end converter and operating at a first or third voltage in a two-level mode,
- FIG. 38 and FIG. 39 illustrate the commutation paths in an MMC employed as a motor-end converter and operating at a fourth and a fifth voltages in a two-level mode.

### DETAILED DESCRIPTION OF THE PREFERRED EMBODIMENTS

The following shows preferred examples of the present description. Note that the present description is not limited to the following configurations.

The invention utilizes and optimizes the combined use of a hybrid modular multi-level rectifier (HMMR) as the front-end and a hybrid modular multi-level converter (HMMC) as the motor-end converter.

The front-end rectifier of the back-to-back HMMR-HMMC based indirect AC-DC-AC topology is effective in generating a constant DC link voltage while providing power / current to the motor in steady state operation and during startup.

In an embodiment, the motor-end HMMC motor drive is able to operate in an MMC plus DC/DC chopper mode during motor startup, in order to provide a variable chain link (CL) DC voltage of the HMMC of the motor drive to maintain a constant ratio of VCL/f in order to keep a low and constant voltage ripple on the SM capacitors. This variable CL DC voltage is achieved without an extra external DC chopper as is the case in the prior-art. In addition, there are two DC/DC chopper modes available, i.e., 2-level or 3-level, all accomplished with the embedded hardware (semiconductor switches) within the motor-end HMMC motor drive.

In another embodiment, the motor-end HMMC motor drive is able to operate in a three-levels (3L) Active Neutral Point Clamped (acronym "ANPC") mode during motor startup to overcome large ripple effects observed in submodules capacitor. When an MMC is used motor-end, a similar effect is achieved albeit with a two-levels (2L) mode during motor startup.

As it will become apparent, the same layout can be reconfigured to operate either as an MMC plus DC/DC chopper mode or as a 3L mode.

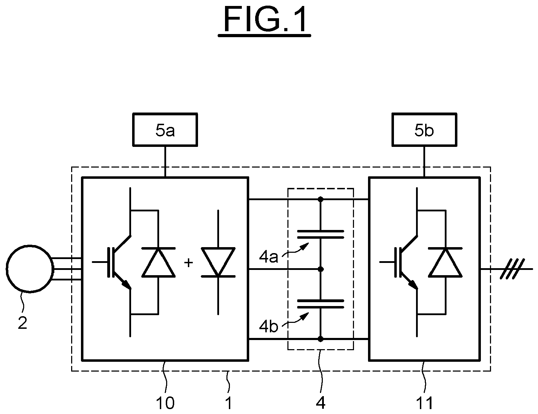

FIG. 1 illustrates a first embodiment of the invention wherein the AC-DC-AC converter 1 feeding power to a motor from an AC source 2 comprises a front-end converter 10 being a hybrid multilevel modular rectifier HMMR and a motor-end converter 11 being a hybrid multilevel modular converter HMMC. The output of the front-end converter 10 is connected to the input of the motor-end converter 11 through a DC link 4. The DC link 4 comprises two capacitances 4a,4b connected in series, each simultaneously connected to a pair of DC connections of the front-end hybrid modular multilevel rectifier and the motor-end hybrid modular multilevel converter.

The AC-DC-AC converter 1 comprises a first controller 5a for controlling and switching of the controllable switches comprised within the front-end converter 10 and a second controller 5b for controlling and switching of the controllable switches comprised within the motor-end converter 11. Depending on the embodiments, the first controller 5a and the second controller 5b are independent, directly or indirectly linked, or integrated within a same control unit.

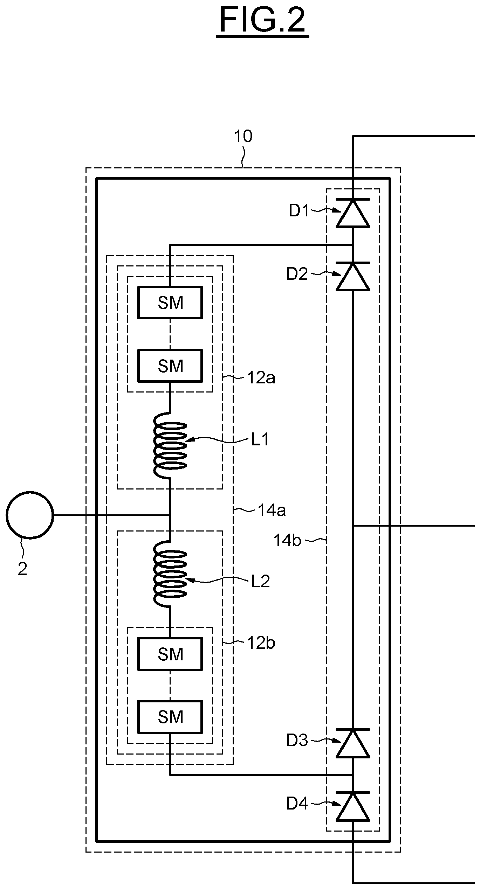

The hybrid multilevel modular rectifier (HMMR) exists as three different variants, illustrated in FIG. 2, FIG. 3 and FIG. 4 and can be used as a front-end converter 10 in the present embodiment.

The first hybrid modular multilevel rectifier variant and the second hybrid modular multilevel rectifier variant are best suited for applications with low modulation indices where the half DC link voltage is generally greater than the instantaneous max supply / source AC phase voltage. The third hybrid modular multilevel rectifier variant is best suited for applications where the DC link voltage is lower than or equal to the instantaneous max supply / source AC phase voltage.

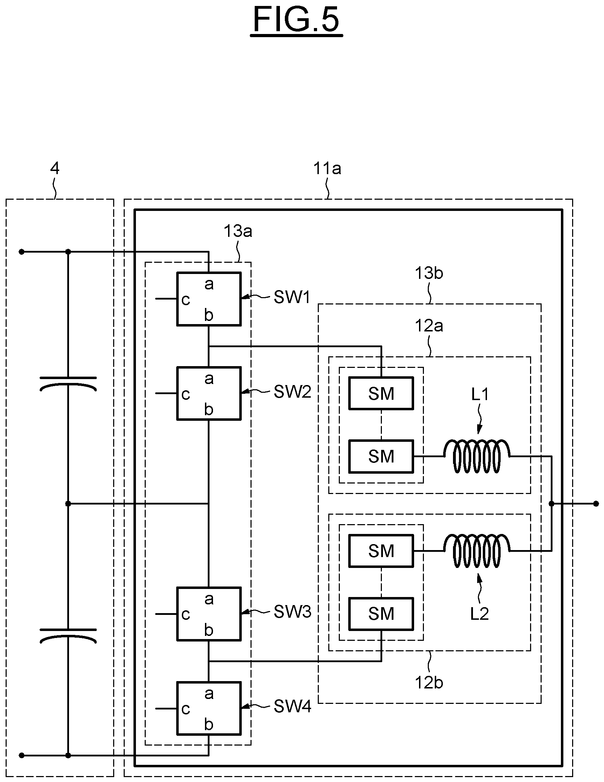

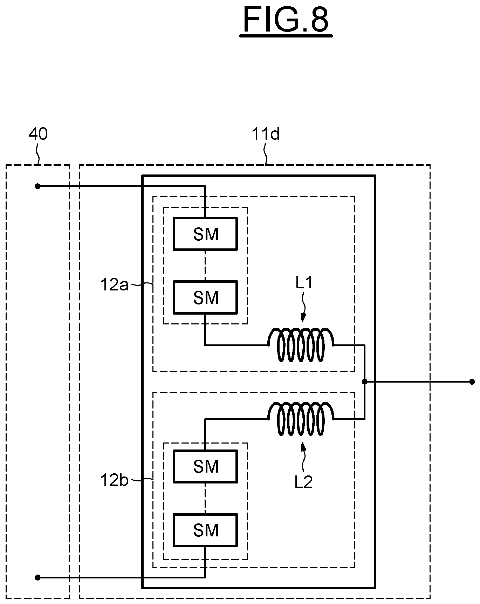

Three HMMC variants described below in relation with FIG. 5, FIG. 6 and FIG. 7 can be used as a motor-end converter 11 in the present embodiment. An MMC variant, described below in relation with FIG. 8 can also be used as a motor-end converter 11 in the present embodiment.

The first hybrid modular multilevel rectifier (HMMR) variant illustrated in FIG. 2 comprises at least one leg 10 connected to an AC connection and to three DC connections. Each leg 10 comprises a first string 14a comprising at least one submodule SM of a plurality of submodules and two inductors L1,L2 and a second string 14b comprising at least four diodes D1,D2,D3,D4 of a plurality of diodes in series.

The first string 14a comprises two branches 12a,12b, each branch of the first string 14a comprising an inductor L1,L2 and at least one submodule SM of a plurality of submodules in series.

The first branch 12a of the first string 14a comprises the first inductor L1 and is connected to the second string 14b by a first submodule SM and to the AC connection by the first inductor L1.

The second branch 12b of the first string 14a comprises the second inductor L2 and is connected to the second string 14b by a first submodule SM and to the AC connection by the second inductor L2.

In the second string 14b, the cathode of the first diode D1 is connected to a first DC connection.

The first diode D1 anode and the second diode D2 cathode are connected to the first string 14a, in particular to a submodule SM of the first branch 12a of the first string 14a.

The anode of the second diode D2 and the cathode of the third diode are connected to a second DC connection.

The third diode D3 anode and the fourth diode D4 cathode are connected to the first string 14a, in particular to a submodule SM of the second branch 12b of the first string 14a.

The anode of the fourth diode is connected to a third DC connection.

Other embodiments of the first hybrid modular multilevel rectifier variant comprise a different number of legs. In other words, in other embodiments, a first hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

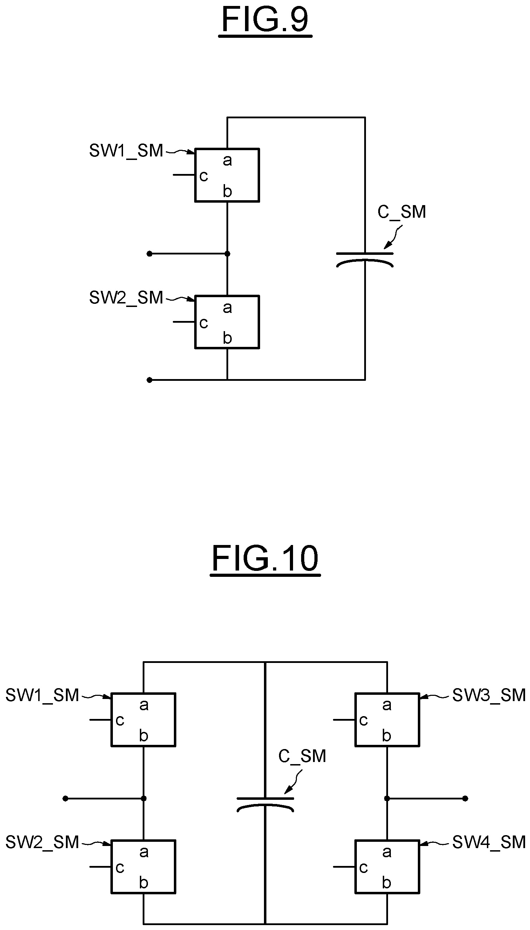

In each branch 12a,12b, the submodules SM are half-bridge submodules (as illustrated in FIG. 9), full-bridge submodules (as illustrated in FIG. 10) or any combination thereof.

In a preferred embodiment, half-bridge submodules are used for applications where the half DC link voltage is greater than the peak / maximum AC phase voltage.

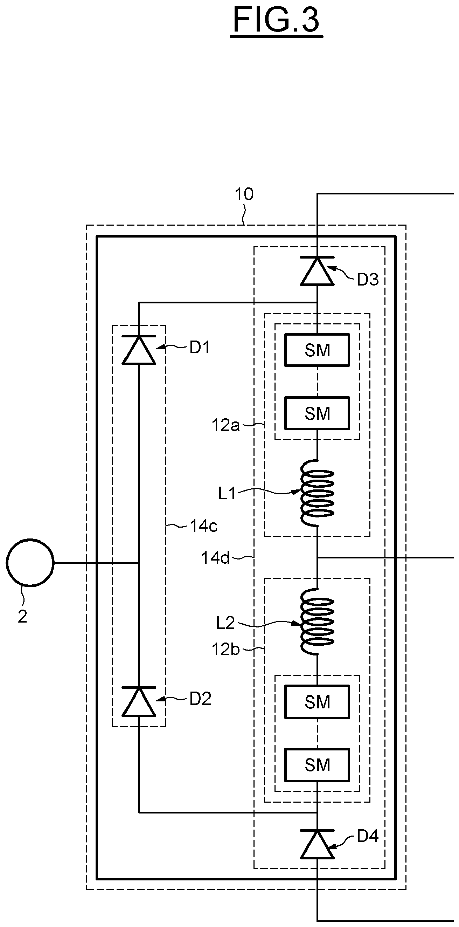

The second HMMR variant illustrated in FIG. 3 comprises at least one leg 10, each leg being connected to an AC connection and to three DC connections.

Each leg 10 comprises a first string 14c comprising at least two diodes D1,D2 of a plurality of diodes in series and a second string 14d comprising at least two diodes D3,D4 of a plurality of diodes in series, at least one submodule SM of a plurality of submodules and two inductors L1,L2 one in each of the two branches 12a,12b of the second string 14d. Each branch 12a,12b comprises an inductor L1,L2 and at least one submodule SM in series of the second string 14d.

The first string 14c comprises at least a first diode D1 of a plurality of diodes connected in series. The first diode D1 of the first string 14c is connected by its anode to the AC connection and by its cathode to the second string 14d. The first string 14c also comprises at least a second diode D2 of a plurality of diodes connected in series. The second diode D2 of the first string 14c is connected by its cathode to the AC connection and by its anode to the second string 14d.

In the second string 14d, a first DC connection is connected to the cathode of a third diode D3 of a plurality of diodes connected in series. The anode of the third diode D3 is connected to submodule SM of the first branch 12a and to the first string 14c. More precisely, the anode of the third diode D3 is connected to the cathode of the first diode D1 of the first string 14c.

The first branch inductor L1 and the second branch inductor L2 of the second string 14d are connected together to a second DC connection.

A third DC connection is connected to the anode of the fourth diode D4 of a plurality of diodes connected in series. The cathode of the fourth diode D4 is connected to a submodule SM of the second branch 12b of the second string 14d and to the first string 14c. More precisely, the cathode of the fourth diode D4 is connected to the anode of the second diode D2 of the first string 14c.

Other embodiments of the second hybrid modular multilevel rectifier variant comprise a different number of legs. In other words, in other embodiments, a second hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch 12a,12b, the submodules SM half-bridge submodules (as illustrated in FIG. 9), full-bridge submodules (as illustrated in FIG. 10) or any combination thereof.

In a preferred embodiment, the submodules are half-bridge submodules used for applications where the half DC link voltage is greater than the peak / maximum AC phase voltage.

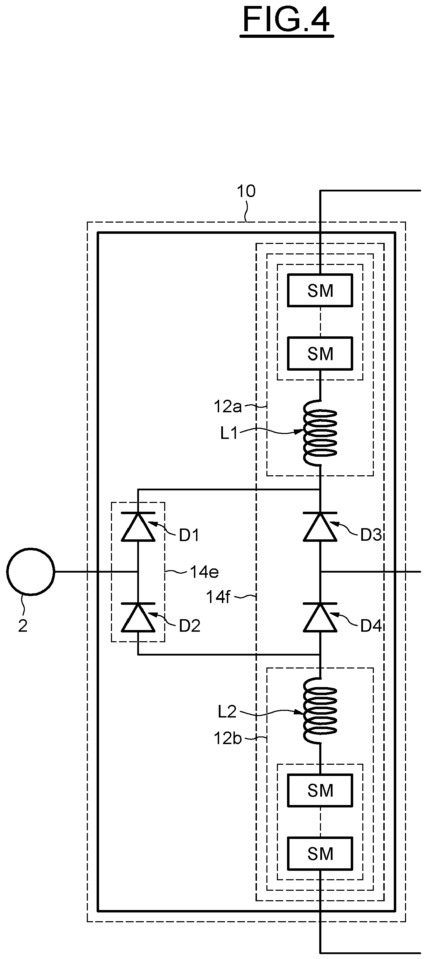

The third HMMR variant illustrated in FIG. 4 comprises at least one leg 10, each leg being connected to an AC connection and to three DC connections.

Each leg comprises a first string 14e comprising at least two diodes D1,D2 of a plurality of diodes in series, and a second string 14f comprising at least two diodes D3,D4 of a plurality of diodes in series, and at least one submodule SM of a plurality of submodules in series and two inductors L1,L2 each in one of the two branches 12a,12b of the second string 14f. Each branch 12a,12b of the second string 14f comprises an inductor L1,L2 and at least one submodule SM in series.

In the first string 14e, the AC connection is connected to the first diode D1 anode and to the second diode D2 cathode. The first diode D1 cathode and the second diode D2 anode are both separately connected to the second string 14f.

In the second string 14f, the first branch 12a comprising the first inductor L1 is connected by a submodule SM to a first DC connection and by the first inductor L1 to the cathode of third diode D3 and to the first string 14e. More precisely, the first inductor L1 and the cathode of third diode D3 are connected to the cathode of the first diode D1.

The second branch 12b of the second string 14f comprising the second inductor L2 is connected by a submodule SM to a third DC connection and by the second inductor L2 to the anode of fourth diode D4 of the second string 14f and to the first string 14e. More precisely, the second inductor L2 and the anode of fourth diode D4 of the second string 14f are connected to the anode of the second diode D2 of the second string 14f.

The anode of the third diode D3 and the cathode of the diode D4 in the second string 14f are connected together to a second DC connection.

Other embodiments of the third hybrid modular multilevel rectifier variant comprise a different number of legs. In other words, in other embodiments, a third hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch 12a,12b, the submodules SM are half-bridge submodules (as illustrated in FIG. 9), full-bridge submodules (as illustrated in FIG. 10) or any combination thereof.

In a preferred embodiment, the submodules are full-bridge or hybrid submodules used for applications where the half DC link voltage is less than or equal to the peak / maximum AC phase voltage.

A first variant of a hybrid modular multilevel converter is illustrated in FIG. 5. It comprises at least one leg 11a connected to an AC connection and to three DC connections. Each leg 11a comprises a first string 13a comprising at least four controllable switches SW1,SW2,SW3,SW4 of a plurality of controllable switches connected in series and a second string 13b comprising two branches 12a,12b, each branch 12a,12b comprising at least one submodule SM of a plurality of submodules (two shown in each branch of 12a or 12b in FIG. 5) and an inductor L1 or L2 in series.

In the present specification, an inductor is to be understood in the broader sense, as an element exhibiting an inductance, or an impedance with an inductance component. The inductance can be either intrinsic or parasitic.

Each controllable switch SW1,SW2,SW3,SW4 comprises a first end, a second end and a control end, respectively labelled a, b and c.

A first controllable switch SW1 is connected by the first end to a first DC connection, and by the second end to the first end of a second controllable switch SW2 and to the second string 13b.

The second end of the second controllable switch SW2 is connected to both a second DC connection and the first end of a third controllable switch SW3. The second end of the third controllable switch SW3 is connected to a first end of fourth controllable switch SW4 and to the second string 13b.

The second end of the fourth controllable switch SW4 is connected to a third DC connection.

The first branch 12a of the second string 13b is connected by a first submodule SM to the first string 13a, in particular to the second end of the first controllable switch SW1 and the first end of the second controllable switch SW2.

The second branch 12b of the second string 13b is connected by a first submodule SM to the first string 13a, in particular to the second end of the third controllable switch SW3 and the first end of the fourth controllable switch SW4.

The first branch 12a and the second branch 12b are connected to the AC connection through their respective inductors L1, L2.

Other embodiments of the first hybrid modular multilevel converter variant comprise a different number of legs. In other words, in other embodiments, a first hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch 12a,12b, the submodules SM1,SM2 are half-bridge submodules (as illustrated in FIG. 9) or full-bridge submodules (as illustrated in FIG. 10).

In a preferred embodiment, full-bridge submodules are used in applications where the half DC link voltage is less than or equal to the peak / maximum AC phase voltage; or half-bridge submodules are used in applications where the half DC link voltage is greater than the peak / maximum AC phase voltage.

The first HMMC variant is best suited for applications with low modulation index (M = Vac / (Vdc /2) where the half DC link voltage is greater than the instantaneous maximum supply / source AC phase voltage. The first HMMC variant is also designed and optimized for lower cost with a fewer number of components / devices counts compared to the MMC variant. The number of submodules can be as low as half the number of modules in the MMC variant. While high voltage devices will be added, the total number of devices per unit (p.u.) basis will still be reduced significantly. The HV devices are defined as single switches with rated voltage multiple times than the SM rated voltage (e.g., 1.7kV rated SMs, and 6.5 kV or higher rated HV switches), compared to the MMC variant. The size of the submodules capacitors is reduced compared to the MMC variant. Power loss is reduced compared to the MMC variant.

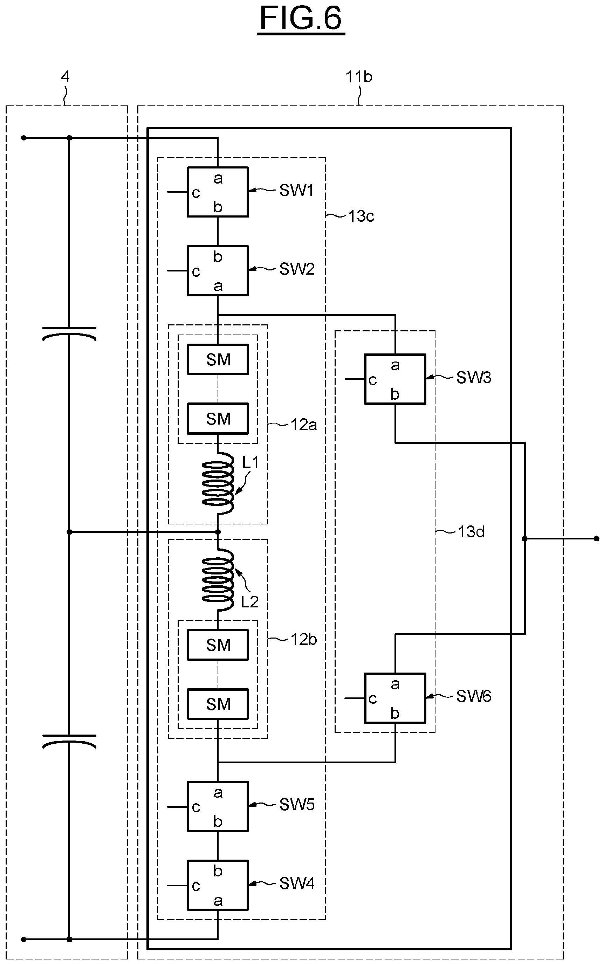

A second variant of a hybrid modular multilevel converter is illustrated in FIG. 6. It comprises at least one leg 11b connected to an AC connection and to three DC connections.

Each leg 11b comprises a first string 13c comprising two branches 12a,12b, each branch comprising at least one submodule SM of a plurality of submodules (two shown in each branch of 12a, 12b in FIG. 6), at least two pairs of controllable switches, SW1, SW2, SW4, SW5 of a plurality of pairs of controllable switches connected in series with opposite polarities, and an inductor L1 or L2 in series, and a second string 13d comprising at least two controllable switches SW3, SW6 of a plurality of controllable switches connected in series in each switch SW3, SW6 location.

Each controllable switch SW1 ,SW2,SW3,SW4,SW5,SW6 comprises a first end, a second end and a control end, respectively labelled a, b and c.

In the first string 13c, the first end of the first controllable switch SW1 of the first pair of controllable switches is connected to a first DC connection. The second end of the first controllable switch SW1 of the first pair of controllable switches is connected to the second end of the second controllable switch SW2 of the first pair of controllable switches.

The first end of the second controllable switch SW2 of the first pair of controllable switches is connected to a first submodule SM of the first branch 12a and to the second string 13d.

The first end of the fourth controllable switch SW4 of the second pair of controllable switches is connected to a third DC connection. The second end of the fourth controllable switch SW4 of the second pair of controllable switches is connected to the second end of the fifth controllable switch SW5 of the second pair of controllable switches. The first end of the fifth controllable switch SW5 of the second pair of controllable switches is connected to a first submodule SM of the second branch 12b and to the second string 13d.

The inductor L1 of the first branch 12a and the inductor L2 of the second branch 12b are connected together to a second DC connection.

In the second string 13d, the first end of the third controllable switch SW3 is connected to the first string 13c, in particular to the first end of the second controllable switch SW2 of the first pair of controllable switches and to the first submodule SM of the first branch 12a.

The second end of the sixth controllable switch SW6 is connected to the first string 13c, in particular to the first end of the fifth controllable switch SW5 of the second pair of controllable switches and to the first submodule SM of the second branch 12b.

The second end of the third controllable switch SW3 and the first end of the sixth controllable switch SW6 are connected together to an AC connection.

Other embodiments of the second hybrid modular multilevel converter variant comprise a different number of legs. In other words, in other embodiments, a second hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections. In each branch 12a,12b, the submodules SM are half-bridge submodules (as illustrated in FIG. 9), full-bridge submodules (as illustrated in FIG. 10) or any combination thereof.

In a preferred embodiment, the submodules SM are half-bridge submodules as illustrated in FIG. 9.

The second HMMC variant is best suited for applications where the half DC link voltage is less than the instantaneous maximum supply / source AC phase voltage. The second HMMC variant is also uniquely designed and optimized for lower cost with the fewest number of components / devices counts. The number of submodules can be reduced by 20% of the number of modules in the MMC variant at the expense of an increased sized of submodules capacitors. Power loss is reduced compared to the MMC variant.

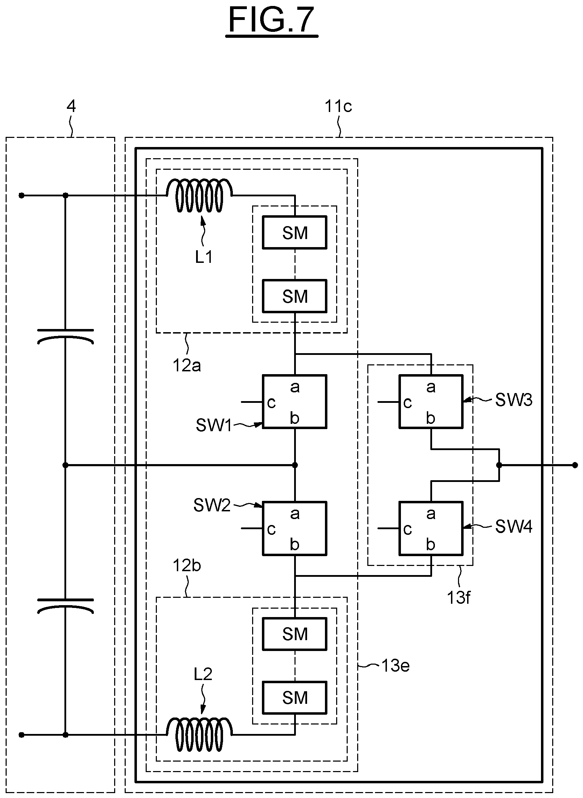

A third variant of a hybrid modular multilevel converter is illustrated in FIG. 7. It comprises at least one leg 11c connected to an AC connection and to three DC connections.

Each leg 11c comprises a first string 13e comprising two branches each connected to at least two controllable switches SW1, SW2 of a plurality of controllable switches connected in series and a second string 13f comprising at least of two controllable switches SW3, SW4 of a plurality of controllable switches. Each branch 12a,12b comprises at least one submodules SM of a plurality of submodules (two shown in each branch of 12a or 12b in FIG. 7) in series and an inductor L1, L2 in each respective branch of 12a or 12b.

In the first string 13e, the first branch 12a is connected to a first DC connection by the first inductor L1. The first branch 12a is connected by a first submodule SM to the first end of a first controllable switch SW1 and to the second string 13f.

Also, in the first string 13e, the second branch 12b is connected to a third DC connection by the second inductor L2. The second branch 12b is connected by a first submodule SM to the second end of a second controllable switch SW2 and to the second string 13f.

Still in the first string 13e, the second end of the first controllable switch SW1 is connected to the first end of the second controllable switch SW2 and to a second DC connection.

The second string 13f comprises at least two controllable switches SW3, SW4 of a plurality of controllable switches connected in series in each switch location SW3, SW4. The first end of the third controllable switch SW3 is connected to the first string 13e, in particular to the first end of first controllable switch SW1 and to the first submodule of the first branch 12a.

The second end of the fourth controllable switch SW4 is connected to the first string 13e, in particular to the second end of second controllable switch SW2 and to the first submodule of the second branch 12b.

The second end of the third controllable switch SW3 and the first end of the fourth controllable switch SW4 are connected to an AC connection.

Other embodiments of the third hybrid modular multilevel converter variant comprise a different number of legs. In other words, in other embodiments, a third hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In either branch 12a,12b, the submodules SM are half-bridge submodules (as illustrated in FIG. 9), full-bridge submodules (as illustrated in FIG. 10) or any combination thereof.

In a preferred embodiment, full-bridge submodules are used in applications where the half DC link voltage is less than or equal to the peak / maximum AC phase voltage; or half-bridge submodules are used in applications where the half DC link voltage is greater than the peak / maximum AC phase voltage.

The third HMMC variant is best suited for applications where the half DC link voltage is less than the instantaneous maximum supply / source AC phase voltage. The third HMMC variant is also designed and optimized for lower cost with a number of components / devices counts compared to the MMC variant. The number of submodules can be as low as a third of the number of modules in the MMC variant, albeit higher than the number of submodules in the first and second HMMC variants. The size of submodule capacitors is also reduced compared to the MMC variant and comprised between those of the first and second HMMC variants. Power loss is reduced compared to the MMC variant.

FIG. 8 illustrates an MMC variant comprising at least one leg 11d connected to an AC connection and to two DC connections of a DC link 40. It is to ne noted that DC link 40 is specific to the MMC variant.

A leg 11d comprises a single string with two branches 12a,12b.

Each branch 12a,12b comprises at least one submodule SM of a plurality of submodules (two shown in each branch 12a, 12b in FIG. 8) in series and an inductor L1, L2 in each respective branch 12a,12b.

The first branch 12a is connected to a DC connection by a submodule SM and to the AC connection by the first inductor L1. The second branch 12b is connected to another DC connection by a submodule SM and to the AC connection by the second inductor L2.

The different variants of submodules SM will now be described.

A first submodule variant is built upon controllable switches in a full bridge configuration as illustrated in FIG. 10. It comprises two connections, four controllable switches SW1_SM, SW2_SM, SW3_SM, SW4_SM, and a capacitor C_SM.

Each controllable switch SW1_SM,SW2_SM,SW3_SM,SW4_SM comprises a first end, a second end and a control end, respectively labelled a, b and c.

A first submodule connection is connected to the second end of a first controllable switch SW1_SM and to the first end of a second controllable switch SW2_SM.

A second connection is connected to the second end of the third controllable switch SW3_SM and to the first end of the fourth controllable switch SW4_SM.

A first end of the capacitor C_SM is connected to both first ends of the first controllable switch SW1_SM and third controllable switch SW3_SM. A second end of the capacitor C_SM is connected both second ends of the second controllable switch SW2_SM and fourth controllable switch SW4_SM.

In a second variant, the submodules SM are controllable switches in a half bridge configuration as illustrated in FIG. 9.

It comprises two connections, two controllable switches SW1_SM,SW2_SM, and a capacitor C_SM. The first connection is connected to the second end of the first controllable switch SW1_SM and to the first end of the second controllable switch SW2_SM. The second connection is connected to the second end of the second controllable switch SW2_SM.

The capacitor C_SM is connected on one hand to the first end of the first controllable switch SW1_SM and on the other hand to both the second connection and the second end of the second controllable switch SW2_SM.

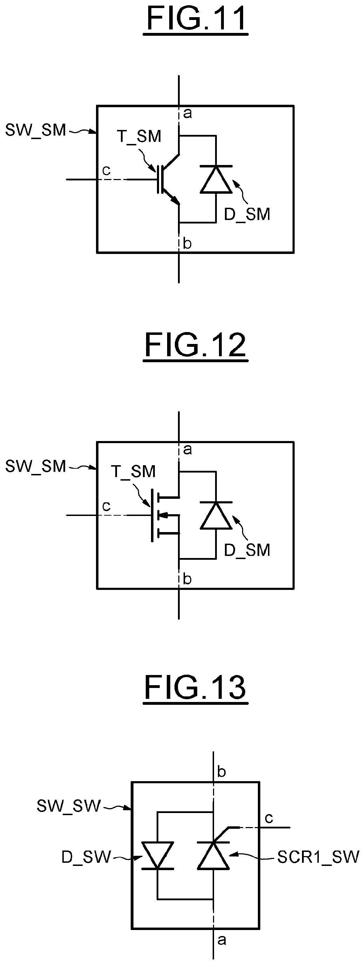

FIG. 11 and FIG. 12 illustrate exemplary embodiments of a controllable switch SW_SM. The controllable switch SW_SM can be any of the controllable switches SW1, SW2, SW3, SW4, SW5, SW6 SW1_SM, SW2_SM, SW3_SM, or SW4_SM comprised in the embodiments described above.

The controllable switch SW_SM comprises a first end, a second end, and a control end, respectively labelled a, b and c. The first end is connected to the collector / source of a bipolar transistor T_SM, the second end being connected to the emitter / drain of said bipolar transistor T_SM. A freewheeling diode D_SM is connected so that its anode is connected to the transistor T_SM drain, its cathode being connected to the transistor T_SM source. The control end is connected to the transistor T_SM gate.

Other embodiments of the controllable switch SW_SM comprise at least two transistors connected in parallel, in series or in a combination of parallel and series.

The transistor T_SM illustrated in FIG. 11 is a bipolar transistor. However, other kinds of transistors can be used, like for example MOSFETs (acronym for "Metal Oxide Silicon Field Effect Transistor") as pictured in FIG. 12, or IEGTs (acronym for "Injection Enhanced Gate Transistor").

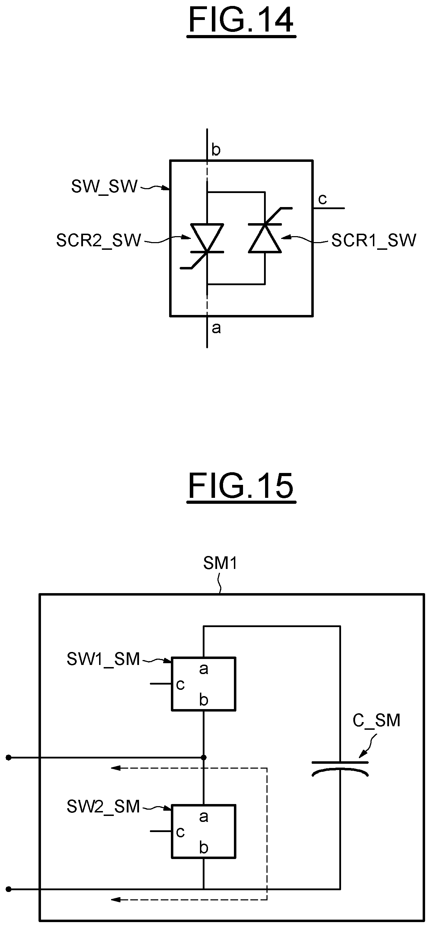

FIG. 13 and FIG. 14 illustrate yet other exemplary embodiments of a controllable switch SW_SW. The controllable switch SW_SW can be any of the controllable switches SW1, SW2, SW3, SW4, SW5, SW6 comprised in the embodiments described above.

The controllable switches SW_SW shown in FIG. 13 and FIG. 14 include an SCR (acronym for "silicon-controlled rectifier.") connected to an antiparallel freewheeling diode.

FIG. 13 illustrates a first embodiment of an SCR-based controllable switch SW_SW comprising a silicon-controlled rectifier labelled SCR1_SW and a freewheeling diode D_SW. The first end of the SCR-based controllable switch SW_SW is connected to the anode of the silicon-controlled rectifier SCR1_SW and to the cathode of the freewheeling diode D_SW. The second end of the SCR-based controllable switch SW_SW is connected to the cathode of the SCR SCR1_SW and to the anode of the freewheeling diode D_SW. The control end of the SCR-based controllable switch SW_SW is connected to the gate of the silicon-controlled rectifier SCR1_SW.

FIG. 14 illustrates a second embodiment of an SCR-based controllable switch SW_SW comprising two silicon-controlled rectifiers labelled SCR1_SW and SCR2_SW.

A first end of the SCR-based controllable switch SW_SW is connected to the anode of the first silicon-controlled rectifier SCR1_SW and to the cathode of the second silicon-controlled rectifier SCR2_SW.

The second end of the SCR-based controllable switch SW_SW is connected to the cathode of the first silicon-controlled rectifier SCR1_SW and to the anode of the second silicon-controlled rectifier SCR2_SW.

The control end of the SCR-based controllable switch SW_SW is connected directly or indirectly to the gates of both silicon-controlled rectifier SCR1_SW, SCR2_SW. For instance, one of the silicon-controlled rectifiers can be connected directly while the other is connected through signal processing means. Such signal processing means can be configured to delay a signal by a duration, either a fixed duration or a variable duration, or to trigger the emission of a pulsed width modulated signal upon receiving a command signal. The signal processing means can be configured to generate a command signal based on a multiplexed signal received. Other signal processing means can be used without departing from the scope of the invention.

The AC-DC-AC converter described above comprising an HMMC as illustrated in FIG. 5, FIG. 6 and FIG. 7 as a motor-end converter can be controlled in a 3L ANPC mode/2L mode. When the AC-DC-AC converter comprises an MMC as illustrated by FIG. 8 as a motor-end converter, it can be controlled in a 2L mode.

When the submodule is a half bridge submodule, and the submodule is commanded in a conducting state, the submodule is constrained and derated in order to achieve a preferred commutation path. The preferred commutation path is illustrated as a dashed line in FIG. 15. In order to do so, the first controllable switch SW1_SM is controlled as non-conducting ("off") and the second controllable switch SW2_SM is controlled as conducting ("on").

When the submodule is a full bridge submodule, and the submodule is commanded in a conducting state, the submodule is constrained and derated in order to achieve one of two commutation paths.

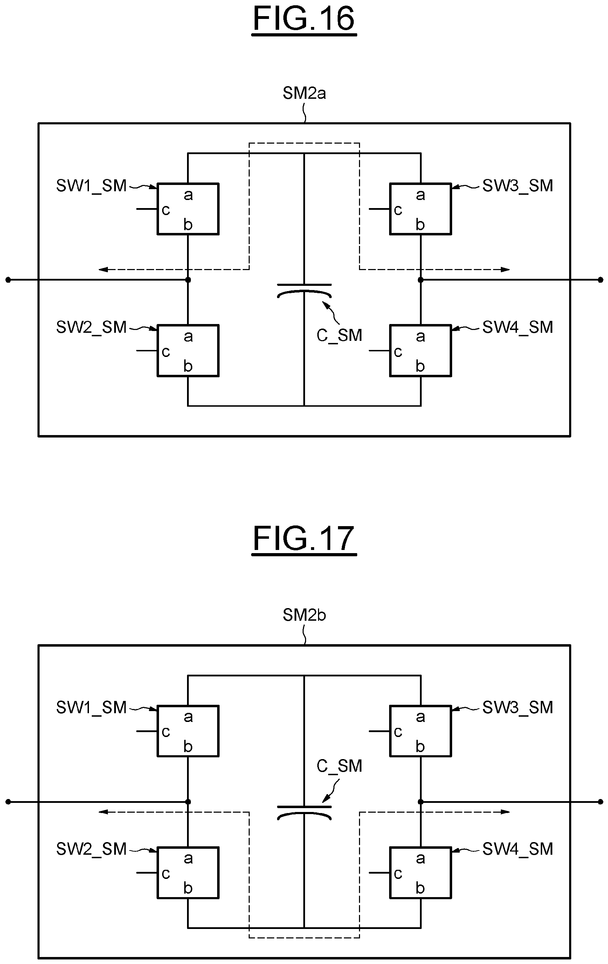

The first commutation path is illustrated as a dashed line in FIG. 16. In order to do so, the second controllable switch SW2_SM and the fourth controllable switch SW4_SM are controlled as non-conducting ("off"). The first controllable switch SW1_SM and the third controllable switch SW3_SM are controlled as conducting ("on").

The second commutation path is illustrated as a dashed line in FIG. 17. In order to do so, the first controllable switch SW1_SM and the third controllable switch SW3_SM are controlled as non-conducting ("off"). Then second controllable switch SW2_SM and the fourth controllable switch SW4_SM are controlled as conducting ("on").

By derated submodule, it is to be understood that the submodule behave like a controllable switch. In a half-bridge submodule, one submodule switch is kept non conducting. The derated half-bridge submodule is equivalent to a single controllable switch.

Similarly, in a full-bridge submodule, two submodule switches are kept non conducting. The derated full-bridge submodule is equivalent to two single controllable switches in series.

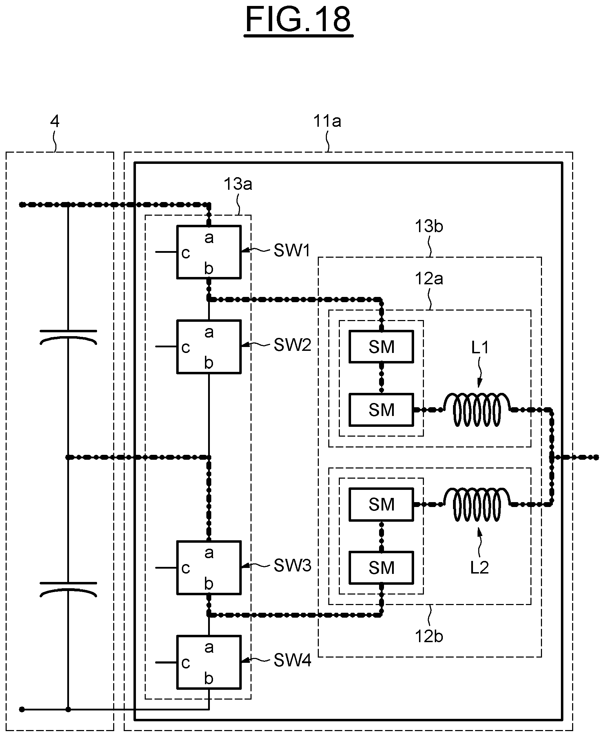

FIG. 18 to FIG. 20 illustrate the different conducting paths for achieving three voltage levels when the motor-end (ME) converter operates in a 3L ANPC mode, the motor-end (ME) converter being a first variant HMMC illustrated by FIG. 5.

When the DC voltage required to generate the AC voltage is equal to Vdc/2, the motor-end converter 11 is commanded to connect the first DC connection to the AC connection and to connect the second DC connection to the AC connection. The DC voltage then results in a Vdc/2 AC voltage fed to the motor.

In order to do so, the first controllable switch SW1 and the third controllable switch SW3 are commanded in a conducting ("on") state while the second controllable switch SW2 and the fourth controllable switch SW4 are commanded in a non-conducting ("off") state.

A first conducting path between the first DC connection and the AC connection is then created through the first controllable switch SW1 and the first branch 12a. A second conducting path between the second DC connection and the AC connection is created through the third controllable switch SW3 and the second branch 12b. FIG. 18 illustrates the first conducting path and the second conducting path as lines with a dash-dot pattern.

When the DC voltage required to generate the AC voltage is equal to 0, the motor-end converter 11 is commanded to connect the second DC connection to the AC connection. The DC voltage then results in a 0 AC voltage fed to the motor.

In order to do so, the second controllable switch SW2 and the third controllable switch SW3 are commanded in a conducting ("on") state while the first controllable switch SW1 and the fourth controllable switch SW4 are commanded in a non-conducting ("off") state.

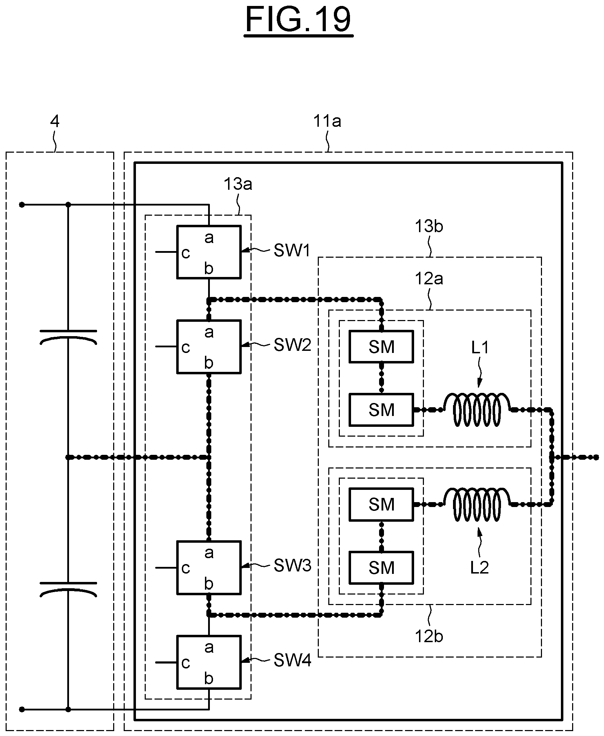

A first conducting path between the second DC connection and the AC connection is then created through the second controllable switch SW2 and the first branch 12a. A second conducting path between the second DC connection and the AC connection is created through the third controllable switch SW3 and the second branch 12b. FIG. 19 illustrates the first conducting path and the second conducting path as lines with a dash-dot pattern.

When the DC voltage required to generate the AC voltage is equal to -Vdc/2, the motor-end converter 11 is commanded to connect the second DC connection to the AC connection and to connect the third DC connection to the AC connection. The DC voltage then results in a -Vdc/2 AC voltage fed to the motor.

In order to do so, the second controllable switch SW2 and the fourth controllable switch SW4 are commanded in a conducting ("on") state while the first controllable switch SW1 and the third controllable switch SW3 are commanded in a non-conducting ("off") state.

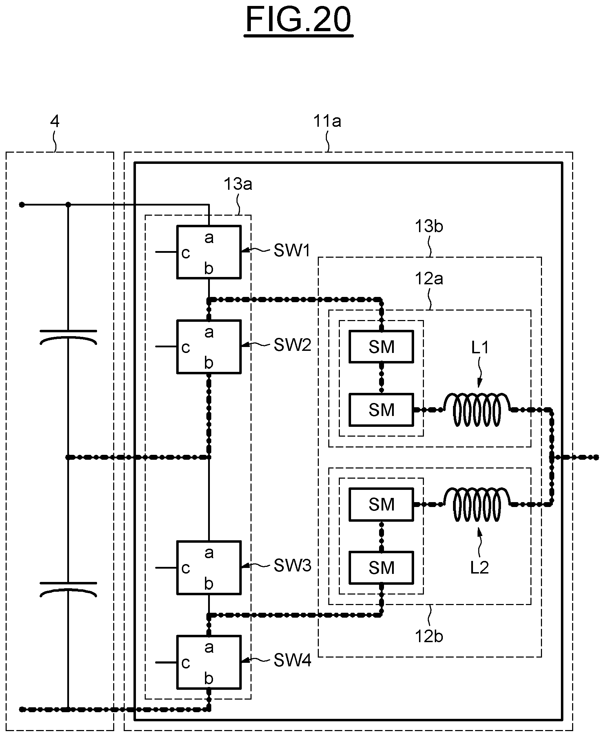

A first conducting path between the second DC connection and the AC connection is then created through the second controllable switch SW2 and the first branch 12a. A second conducting path between the third DC connection and the AC connection is created through the fourth controllable switch SW4 and the second branch 12b. FIG. 20 illustrates the first conducting path and the second conducting path as lines with a dash-dot pattern.

Depending on the AC voltage to be fed to the motor, the motor-end converter is commanded so that one of the three control schemes is applied.

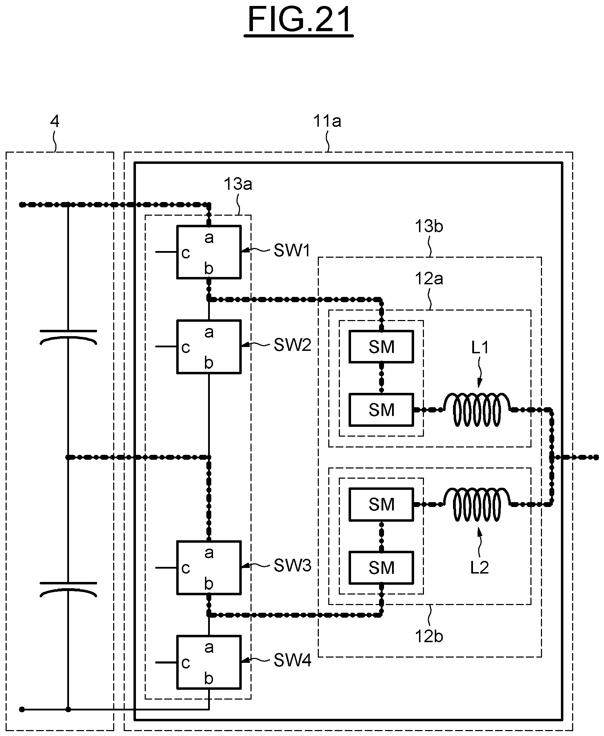

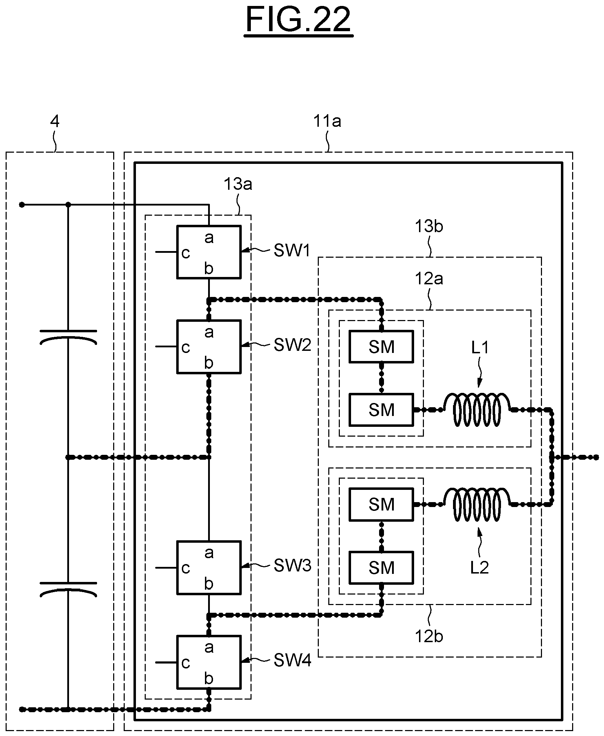

FIG. 21 and FIG. 22 illustrate the different conducting paths for achieving two voltage levels when the motor-end (ME) converter operates in a 2L ANPC mode, the motor-end (ME) converter being a first variant HMMC illustrated by FIG. 5.

When the DC voltage required to generate the AC voltage is equal to Vdc/2, the motor-end converter 11 is commanded to connect the first DC connection to the AC connection and to connect the second DC connection to the AC connection. The DC voltage then results in a Vdc/2 AC voltage fed to the motor.

In order to do so, the first controllable switch SW1 and the third controllable switch SW3 are commanded in a conducting ("on") state while the second controllable switch SW2 and the fourth controllable switch SW4 are commanded in a non-conducting ("off") state.

A first conducting path between the first DC connection and the AC connection is then created through the first controllable switch SW1 and the first branch 12a. A second conducting path between the second DC connection and the AC connection is created through the third controllable switch SW3 and the second branch 12b. FIG. 21 illustrates the first conducting path and the second conducting path as lines with a dash-dot pattern.

When the DC voltage required to generate the AC voltage is equal to -Vdc/2, the motor-end converter 11 is commanded to connect the second DC connection to the AC connection and to connect the third DC connection to the AC connection. The DC voltage then results in a -Vdc/2 AC voltage fed to the motor.

In order to do so, the second controllable switch SW2 and the fourth controllable switch SW4 are commanded in a conducting ("on") state while the first controllable switch SW1 and the third controllable switch SW3 are commanded in a non-conducting ("off") state.

A first conducting path between the second DC connection and the AC connection is then created through the second controllable switch SW2 and the first branch 12a. A second conducting path between the third DC connection and the AC connection is created through the fourth controllable switch SW4 and the second branch 12b. FIG. 22 illustrates the first conducting path and the second conducting path as lines with a dash-dot pattern.

Depending on the AC voltage to be fed to the motor, the motor-end converter is commanded so that one of the two control schemes is applied.

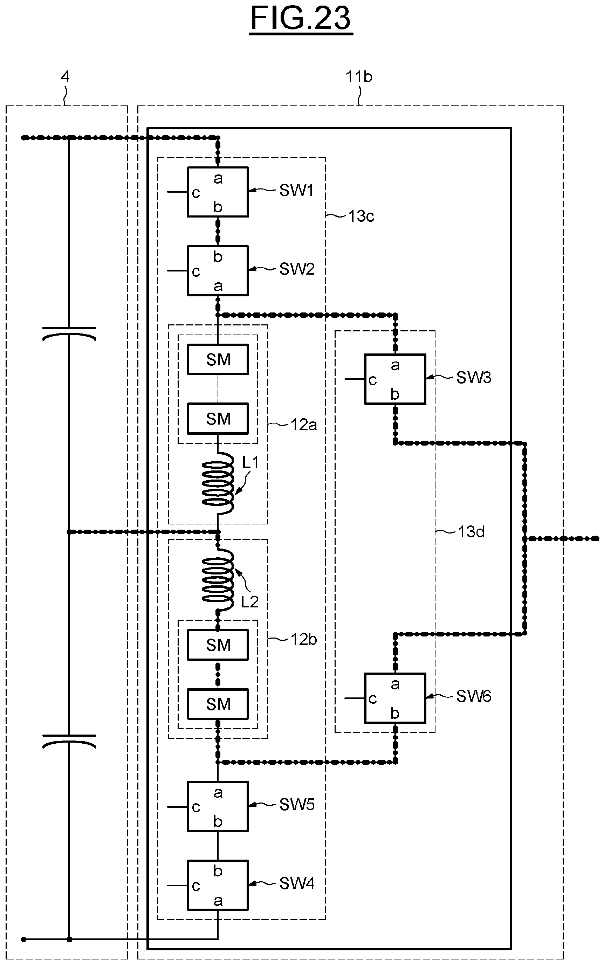

FIG. 23 to FIG. 25 illustrate the different conducting paths for achieving three voltage levels when the motor-end (ME) converter operates in a 3L ANPC mode, the motor-end (ME) converter being the second variant HMMC illustrated by FIG. 6. In ANPC mode, the DC voltages are used directly in generating AC voltage by approximating a sinusoidal waveform. By contrast, in the chopper + MMC mode, the chopper serves as a DC/DC converter to reduce a DC link voltage, which is then fed to the MMC conversion stage. The AC waveform is generated / approximated by the MMC conversion, AC connection is therefore not in direct contact with the DC level voltages.

When the AC voltage required is equal to Vdc/2, the motor-end converter 11 is commanded to connect the first DC connection to the AC connection and to connect the second DC connection to the AC connection. The DC voltage then results in a Vdc/2 AC voltage fed to the motor.

In order to do so, the first controllable switch SW1, the second controllable switch SW2, the third controllable switch SW3 and the sixth controllable switch SW6 are commanded in a conducting ("on") state while the fourth controllable switch SW4 and the fifth controllable switch SW5 are commanded in a non-conducting ("off") state.

A first conducting path between the first DC connection and the AC connection is then created through the first controllable switch SW1, the second controllable switch SW2 and the third controllable switch SW3. A second conducting path between the second DC connection and the AC connection is created through the second branch 12b and the sixth controllable switch SW6. FIG. 23 illustrates the first conducting path and the second conducting path as lines with a dash-dot pattern.

When the AC voltage required is equal to 0, the motor-end converter 11 is commanded so that the input voltage is generated by connecting the second DC connection to the AC connection., The DC voltage then results in a zero AC voltage fed to the motor.

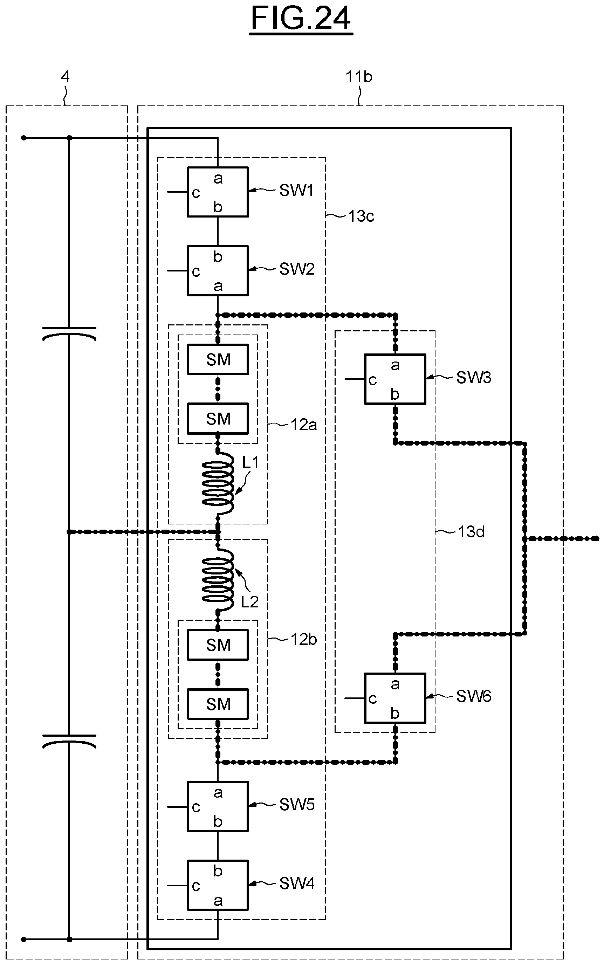

In order to do so, the first controllable switch SW1, the second controllable switch SW2, the fourth controllable switch SW4 and the fifth controllable switch SW5 are commanded in a non-conducting ("off") state while the third controllable switch SW3 and the sixth controllable switch SW6 are commanded in a conducting ("on") state. A first conducting path between the second DC connection and the AC connection is then created through the first branch 12a and the third controllable switch SW3. A second conducting path between the second DC connection and the AC connection is created through the second branch 12b and the sixth controllable switch SW6. FIG. 24 illustrates the first conducting path and the second conducting path as lines with a dash-dot pattern.

When the AC voltage required is equal to -Vdc/2, the motor-end converter 11 is commanded to connect the second DC connection to the AC connection and to connect the third DC connection to the AC connection. The DC voltage then results in a -Vdc/2 AC voltage fed to the motor.

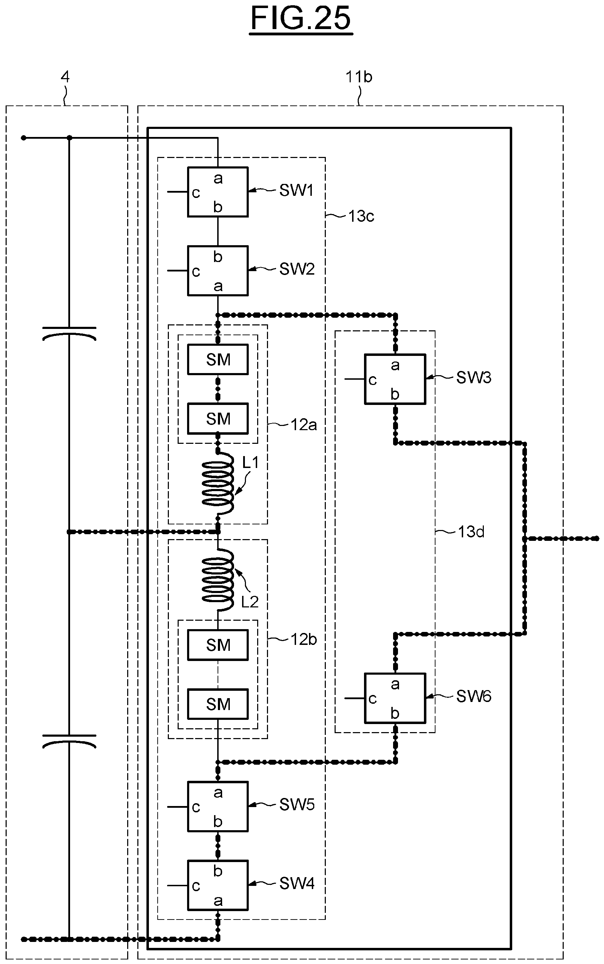

In order to do so, the third controllable switch SW3, the fourth controllable switch SW4, the fifth controllable switch SW5 and the sixth controllable switch SW6 are commanded in a conducting ("on") state while the first controllable switch SW1 and the second controllable switch SW2 are commanded in a non-conducting ("off") state. A first conducting path between the second DC connection and the AC connection is then created through the first branch 12a and the third controllable switch SW3. A second conducting path between the third DC connection and the AC connection is created through the fourth controllable switch SW4, the fifth controllable switch SW5 and the sixth controllable switch SW6. FIG. 25 illustrates the first conducting path and the second conducting path as lines with a dash-dot pattern.

Depending on the AC voltage to be fed to the motor, the motor-end converter is commanded so that one of the three control schemes is applied.

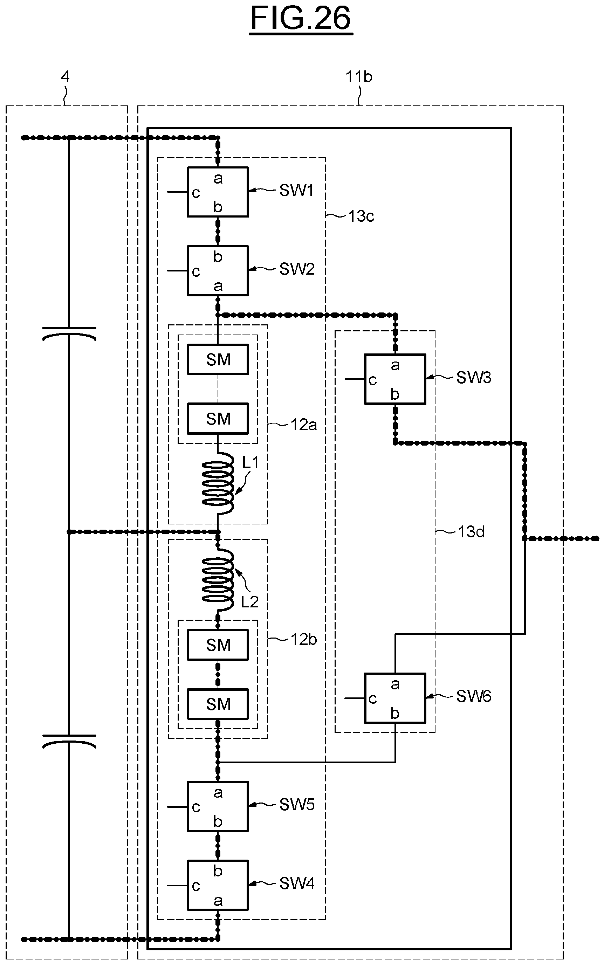

Other control schemes can be applied in order to operate the motor-end converter in a 2L or 3L ANPC mode, when the motor-end converter is the second variant HMMC illustrated by FIG. 6. Those alternative control schemes are illustrated by FIG. 26 to FIG. 32

FIG. 26 to FIG. 28 illustrate the different conducting paths for achieving three voltage levels when the motor-end (ME) converter operates in a 3L ANPC mode, the motor-end (ME) converter being a second variant HMMC illustrated by FIG. 6.

When the AC voltage required is equal to Vdc/2, the motor-end converter 11 is commanded to connect the first DC connection to the AC connection and to connect the second DC connection and the third DC connection. The DC voltage then results in a Vdc/2 AC voltage fed to the motor.

In order to do so, the first controllable switch SW1, the second controllable switch SW2, the third controllable switch SW3, the fourth controllable switch SW4 and the fifth controllable switch SW5 are commanded in a conducting ("on") state while the sixth controllable switch SW6 is commanded in a non-conducting ("off") state.

A first commutation path between the first DC connection and the AC connection is then created through the first controllable switch SW1, the second controllable switch SW2 and the third controllable switch SW3.

A second conducting path between the second DC connection and the third DC connection is then created through the second branch 12b, the fourth controllable switch SW4 and the fifth controllable switch SW5. The submodules (SMs) in the second branch 12b are operating in a regular non-derated mode to support the DC bus through second and third DC connections and help balance the submodule capacitor energy in the second branch 12b.

FIG. 26 illustrates the first conducting path and the second conducting path as lines with a dash-dot pattern.

When the AC voltage required is equal to 0, the motor-end converter 11 is commanded to connect the second DC connection and the AC connection. The DC voltage then results in a zero AC voltage fed to the motor.

In order to do so, the third controllable switch SW3 and the sixth controllable switch SW6 are commanded in a conducting ("on") state while the first controllable switch SW1, the second controllable switch SW2, the fourth controllable switch SW4 and the fifth controllable switch SW5 are commanded in a non-conducting ("off") state.

A first conducting path between the second DC connection and the AC connection is then created through the third controllable switch SW3 and the first branch 12a. A second conducting path between the second DC connection and the AC connection is created through the sixth controllable switch SW6 and the second branch 12b.

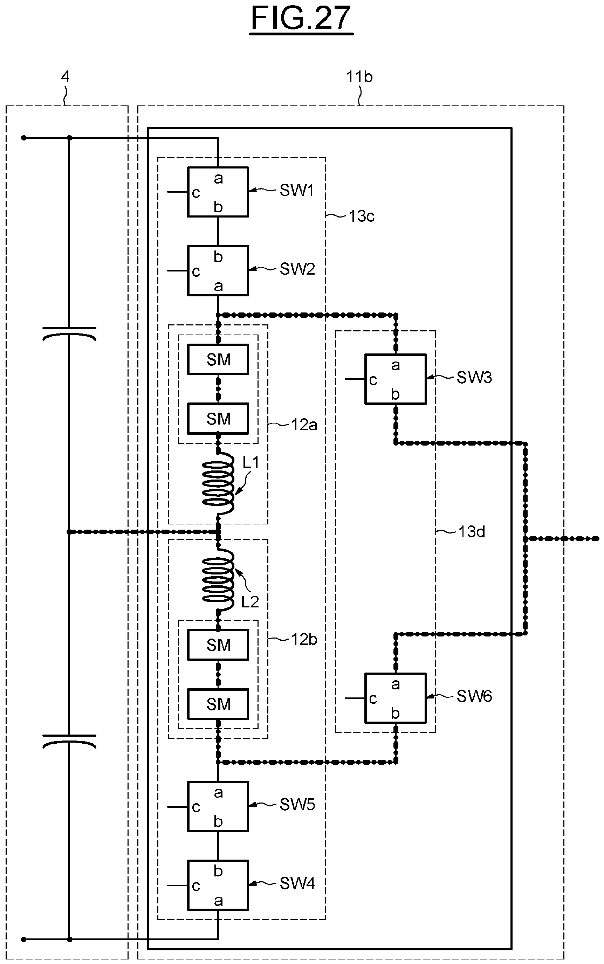

FIG. 27 illustrates the first conducting path and the second conducting path as lines with a dash-dot pattern.

When the AC voltage required is equal to -Vdc/2, the motor-end converter 11 is commanded to connect the first DC connection and the second DC connection and to connect the third DC connection to the AC connection. The DC voltage then results in a -Vdc/2 AC voltage fed to the motor.

In order to do so, the first controllable switch SW1, the second controllable switch SW2, the fourth controllable switch SW4, the fifth controllable switch SW5 and the sixth controllable switch SW6 are commanded in a conducting ("on") state while the third controllable switch SW3 is commanded in a non-conducting ("off") state.

A first conducting path between the first DC connection and the second DC connection is then created through the first controllable switch SW1, the second controllable switch SW2 and the first branch 12a. The submodules (SMs) in the first branch 12a are operating in a regular non-derated mode to support the DC bus through the first and second DC connections and help balance the submodule capacitor energy in the first branch 12a.

A second commutation path between the third DC connection and the AC connection is then created through the fourth controllable switch SW4, the fifth controllable switch SW5 and the sixth controllable switch SW6.

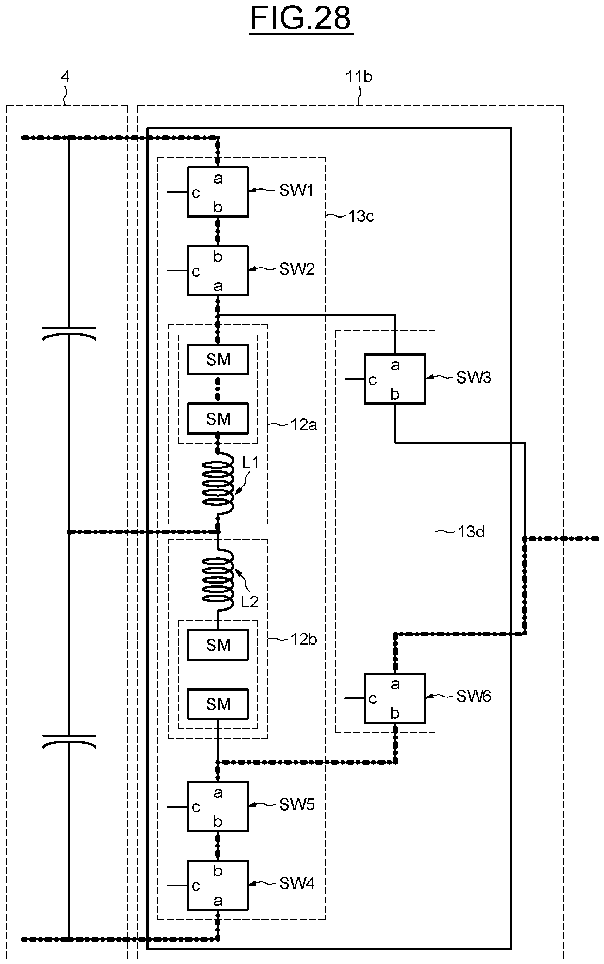

FIG. 28 illustrates the first conducting path and the second conducting path as lines with a dash-dot pattern.

Depending on the AC voltage to be fed to the motor, the motor-end converter is commanded so that one of the three control schemes is applied.

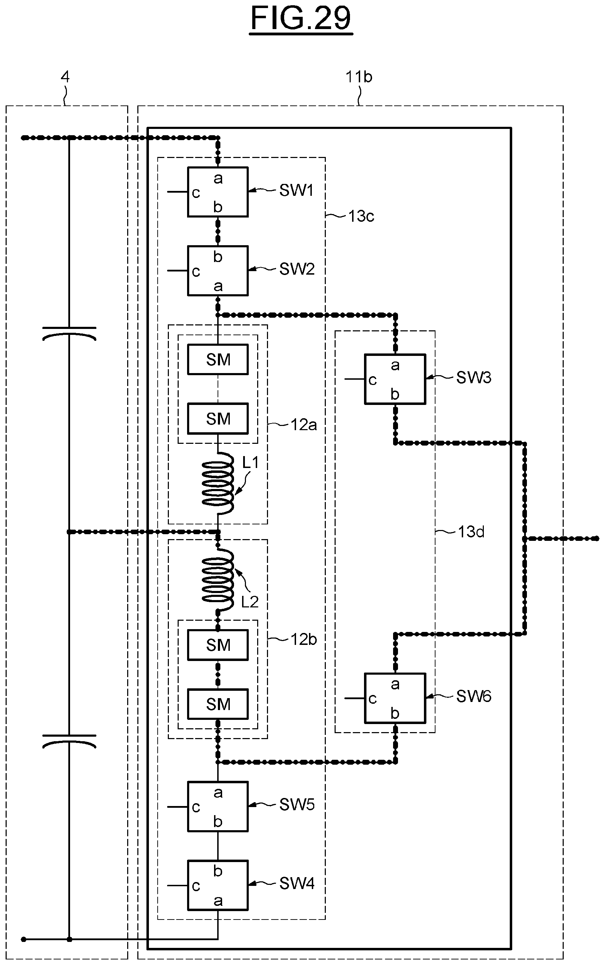

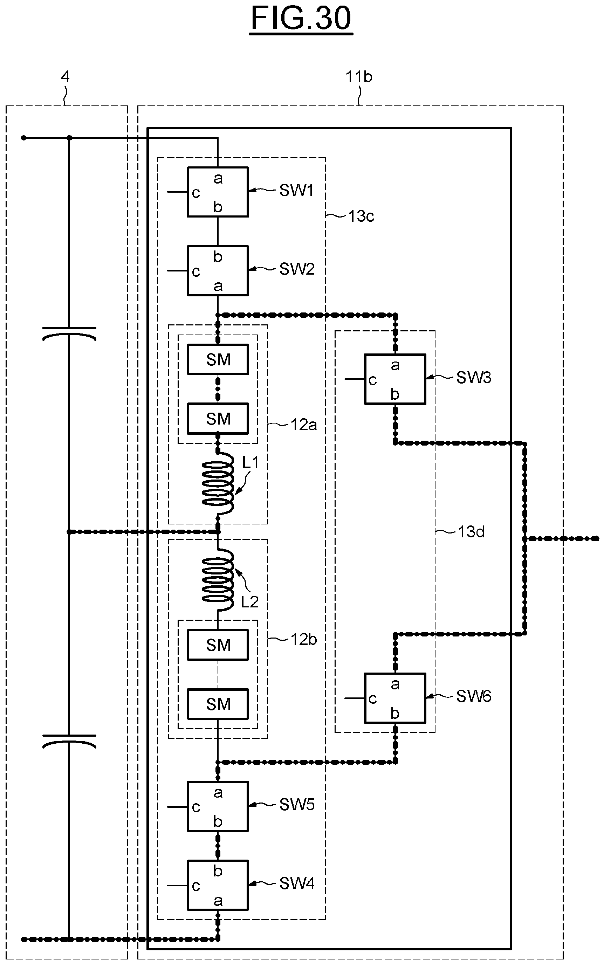

FIG. 29 and FIG. 30 illustrate the different conducting paths for achieving two voltage levels when the motor-end (ME) converter operates in a 2L ANPC mode, the motor-end (ME) converter being the second variant HMMC illustrated by FIG. 6.

When the AC voltage required is equal to Vdc/2, the motor-end converter 11 is commanded to connect the first DC connection to the AC connection and to connect the second DC connection to the AC connection. The DC voltage then results in a Vdc/2 AC voltage fed to the motor.

In order to do so, the first controllable switch SW1, the second controllable switch SW2, the third controllable switch SW3 and the sixth controllable switch SW6 are commanded in a conducting ("on") state while the fourth controllable switch SW4 and the fifth controllable switch SW5 are commanded in a non-conducting ("off") state.

A first conducting path between the first DC connection and the AC connection is then created through the first controllable switch SW1, the second controllable switch SW2 and the third controllable switch SW3. A second conducting path between the second DC connection and the AC connection is created through the second branch 12b and the sixth controllable switch SW6. The submodules (SMs) in the second branch 12b are operating in a regular non-derated mode to support the DC bus through the second DC connection and help balance the submodule capacitor energy in the second branch 12b. FIG. 29 illustrates the first conducting path and the second conducting path as lines with a dash-dot pattern.

When the AC voltage required is equal to -Vdc/2, the motor-end converter 11 is commanded to connect the second DC connection to the AC connection and to connect the third DC connection to the AC connection. The DC voltage then results in a -Vdc/2 AC voltage fed to the motor.

In order to do so, the third controllable switch SW3, the fourth controllable switch SW4, the fifth controllable switch SW5 and the sixth controllable switch SW6 are commanded in a conducting ("on") state while the first controllable switch SW1 and the second controllable switch SW2 are commanded in a non-conducting ("off") state. A first conducting path between the second DC connection and the AC connection is then created through the first branch 12a and the third controllable switch SW3. The submodules (SMs) in the first branch 12a are operating in a regular non-derated mode to support the DC bus through the second DC connection and help balance the submodule capacitor energy in the first branch 12a. A second conducting path between the third DC connection and the AC connection is created through the fourth controllable switch SW4, the fifth controllable switch SW5 and the sixth controllable switch SW6. FIG. 30 illustrates the first conducting path and the second conducting path as lines with a dash-dot pattern.

Depending on the AC voltage to be fed to the motor, the motor-end converter is commanded so that one of the two control schemes is applied.

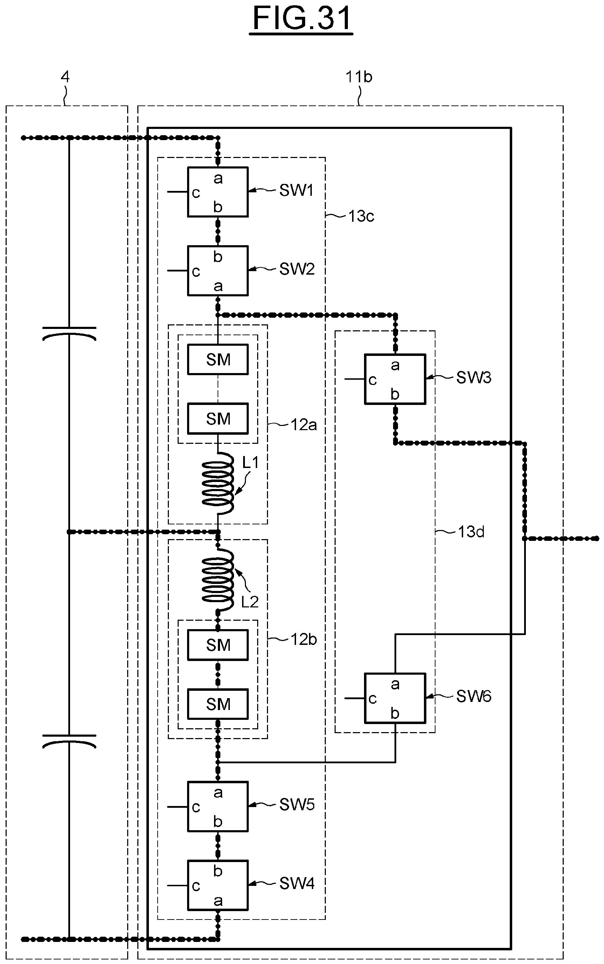

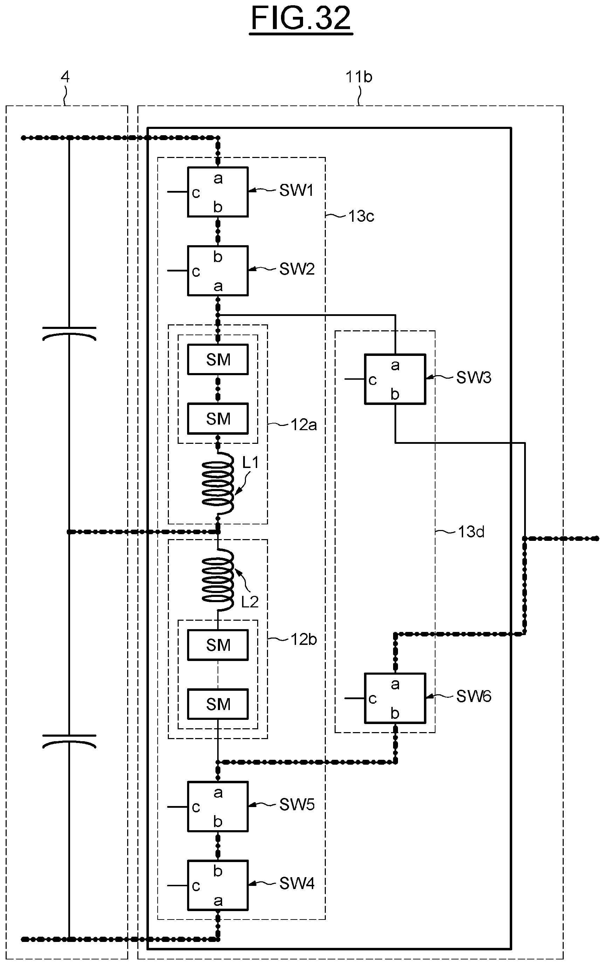

FIG. 31 and FIG. 32 illustrates the different conducting paths for achieving two voltage levels when the motor-end (ME) converter operates in a 2L ANPC mode, the motor-end (ME) converter being the second variant HMMC illustrated by FIG. 6.

When the AC voltage required is equal to Vdc/2, the motor-end converter 11 is commanded to connect the first DC connection to the AC connection and to connect the second DC connection and the third DC connection. The DC voltage then results in a Vdc/2 AC voltage fed to the motor.

In order to do so, the first controllable switch SW1, the second controllable switch SW2, the third controllable switch SW3, the fourth controllable switch SW4 and the fifth controllable switch SW5 are commanded in a conducting ("on") state while the sixth controllable switch SW6 is commanded in a non-conducting ("off") state.

A first commutation path between the first DC connection and the AC connection is then created through the first controllable switch SW1, the second controllable switch SW2 and the third controllable switch SW3.

A second conducting path between the second DC connection and the third DC connection is then created through the second branch 12b, the fourth controllable switch SW4 and the fifth controllable switch SW5. The submodules (SMs) in the second branch 12b are operating in a regular non-derated mode to support the DC bus through the second and third DC connections and help balance the submodule capacitor energy in the second branch 12b.

FIG. 31 illustrates the first conducting path and the second conducting path as lines with a dash-dot pattern.

When the AC voltage required is equal to -Vdc/2, the motor-end converter 11 is commanded to connect the first DC connection and the second DC connection and to connect the third DC connection to the AC connection. The DC voltage then results in a -Vdc/2 AC voltage fed to the motor.

In order to do so, the first controllable switch SW1, the second controllable switch SW2, the fourth controllable switch SW4, the fifth controllable switch SW5 and the sixth controllable switch SW6 are commanded in a conducting ("on") state while the third controllable switch SW3 is commanded in a non-conducting ("off") state.

A first conducting path between the first DC connection and the second DC connection is then created through the first controllable switch SW1, the second controllable switch SW2 and the first branch 12a. The submodules (SMs) in the first branch 12a are operating in a regular non-derated mode to support the DC bus through the first and second DC connections and help balance the submodule capacitor energy in the first branch 12a.

A second commutation path between the third DC connection and the AC connection is then created through the fourth controllable switch SW4, the fifth controllable switch SW5 and the sixth controllable switch SW6.

FIG. 32 illustrates the first conducting path and the second conducting path as lines with a dash-dot pattern.

Depending on the AC voltage to be fed to the motor, the motor-end converter is commanded so that one of the two control schemes is applied.

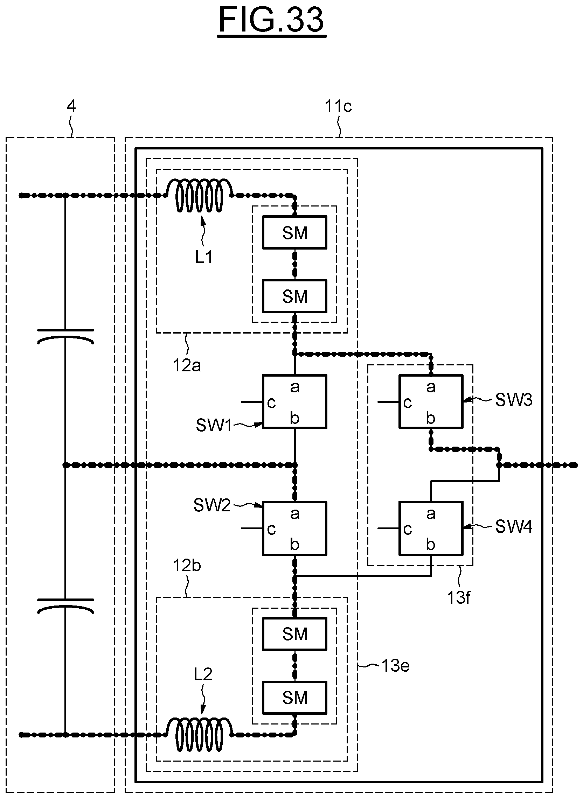

FIG. 33 to FIG. 35 illustrate the different conducting paths for achieving three voltage levels when the motor-end (ME) converter operates in a 3L ANPC mode, the motor-end (ME) converter being the third variant HMMC illustrated by FIG. 7.

When the DC voltage required to generate the AC voltage is equal to Vdc/2, the motor-end converter 11 is commanded to connect the first DC connection and the AC connection and to connect the second DC connection and the third DC connection. The DC voltage then results in a Vdc/2 AC voltage fed to the motor.

In order to do so, the second controllable switch SW2 and the third controllable switch SW3 are commanded in a conducting ("on") state while the first controllable switch SW1 and the fourth controllable switch SW4 are commanded in a non-conducting ("off") state.

A first conducting path between the first DC connection and the AC connection is then created through the third controllable switch SW3 and the first branch 12a. A second conducting path between the second DC connection and the third DC connection is created through the second controllable switch SW2 and the second branch 12b. The submodules (SMs) in the second branch 12b are operating in a regular non-derated mode to support the DC bus through the second and third DC connections and help balance the submodule capacitor energy in the second branch 12b.

FIG. 33 illustrates the first conducting path and the second conducting path as lines with a dash-dot pattern.

When the DC voltage required to generate the AC voltage is equal to 0, the motor-end converter 11 is commanded to connect the second DC connection and the AC connection. The DC voltage then results in a 0 AC voltage fed to the motor.

In order to do so, the first controllable switch SW1, the second controllable switch SW2, the third controllable switch SW3 and the fourth controllable switch SW4 are commanded in a conducting ("on") state.

A first conducting path between the second DC connection and the AC connection is created through the first controllable switch SW1 and the third controllable switch SW3. A second conducting path between the second DC connection and the AC connection is created through the second controllable switch SW2 and the fourth controllable switch SW4.

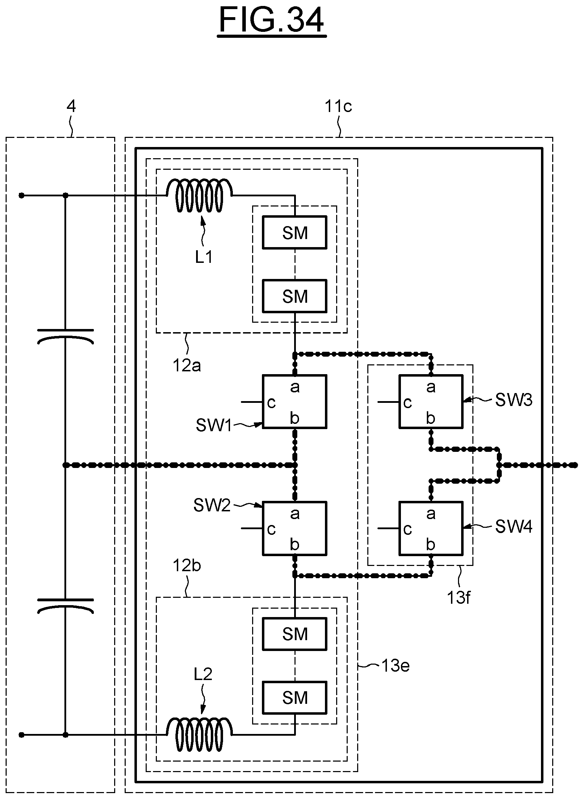

FIG. 34 illustrates the first conducting path and the second conducting path as lines with a dash-dot pattern.

When the DC voltage required to generate the AC voltage is equal to -Vdc/2, the motor-end converter 11 is commanded to connect the first DC connection and the second DC connection and to connect the third DC connection and the AC connection. The DC voltage then results in a -Vdc/2 AC voltage fed to the motor.

In order to do so, the first controllable switch SW1 and the fourth controllable switch SW4 are commanded in a conducting ("on") state while the second controllable switch SW2 and the third controllable switch SW3 are commanded in a non-conducting ("off") state.

A first conducting path between the first DC connection and the second DC connection is then created through the first controllable switch SW1 and the first branch 12a. The submodules (SMs) in the first branch 12a are operating in a regular non-derated mode to support the DC bus through the first and second DC connections and help balance the submodule capacitor energy in the first branch 12a. A second conducting path between the third DC connection and the AC connection is created through the fourth controllable switch SW4 and the second branch 12b.

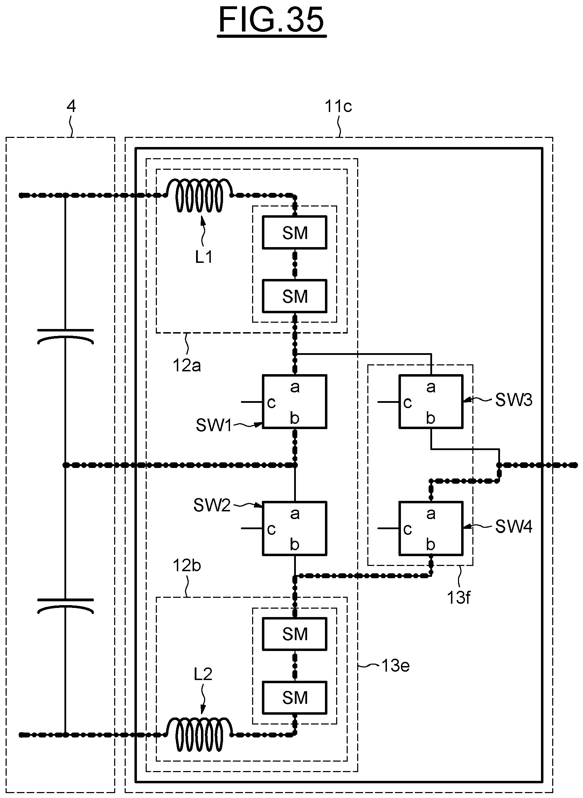

FIG. 35 illustrates the first conducting path and the second conducting path as lines with a dash-dot pattern.

Depending on the AC voltage to be fed to the motor, the motor-end converter is commanded so that one of the three control schemes is applied.

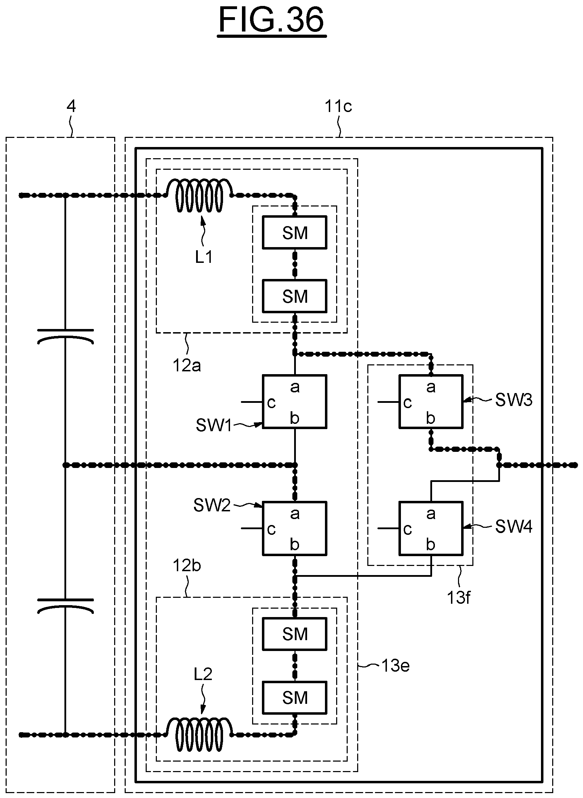

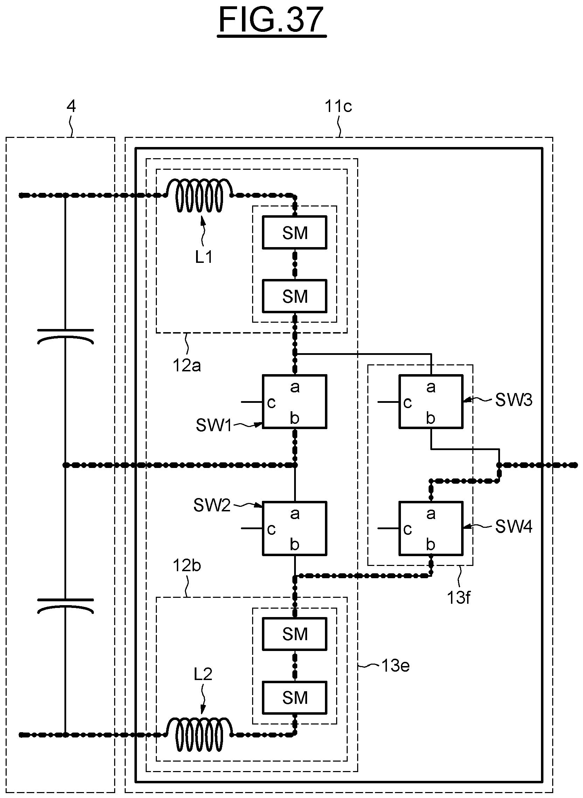

FIG. 36 and FIG. 37 illustrate the different conducting paths for achieving two voltage levels when the motor-end (ME) converter operates in a 2L ANPC mode, the motor-end (ME) converter being the third variant HMMC illustrated by FIG. 7.

When the DC voltage required to generate the AC voltage is equal to Vdc/2, the motor-end converter 11 is commanded to connect the first DC connection and the AC connection and to connect the second DC connection and the third DC connection. The DC voltage then results in a Vdc/2 AC voltage fed to the motor.

In order to do so, the second controllable switch SW2 and the third controllable switch SW3 are commanded in a conducting ("on") state while the first controllable switch SW1 and the fourth controllable switch SW4 are commanded in a non-conducting ("off") state.

A first conducting path between the first DC connection and the AC connection is then created through the third controllable switch SW3 and the first branch 12a. A second conducting path between the second DC connection and the third DC connection is created through the second controllable switch SW2 and the second branch 12b. The submodules (SMs) in the second branch 12b are operating in a regular non-derated mode to support the DC bus through the second and third DC connections and help balance the submodule capacitor energy in the second branch 12b.

FIG. 36 illustrates the first conducting path and the second conducting path as lines with a dash-dot pattern.

When the DC voltage required to generate the AC voltage is equal to -Vdc/2, the motor-end converter 11 is commanded to connect the first DC connection and the second DC connection and to connect the third DC connection and the AC connection. The DC voltage then results in a -Vdc/2 AC voltage fed to the motor.

In order to do so, the first controllable switch SW1 and the fourth controllable switch SW4 are commanded in a conducting ("on") state while the second controllable switch SW2 and the third controllable switch SW3 are commanded in a non-conducting ("off") state.

A first conducting path between the first DC connection and the second DC connection is then created through the first controllable switch SW1 and the first branch 12a. The submodules (SMs) in the first branch 12a are operating in a regular non-derated mode to support the DC bus through the first and second DC connections and help balance the submodule capacitor energy in the first branch 12a. A second conducting path between the third DC connection and the AC connection is created through the fourth controllable switch SW4 and the second branch 12b.

FIG. 37 illustrates the first conducting path and the second conducting path as lines with a dash-dot pattern.

Depending on the AC voltage to be fed to the motor, the motor-end converter is commanded so that one of the two control schemes is applied.

Each of the control scheme described above and illustrated by FIG. 18 to FIG. 37 comprises two conducting paths, one connecting a DC connection to the AC connection, and another connecting two DC connections or the second DC connection and the AC connection.

The submodules involved in a commutation path connecting two DC connections or the second DC connection and the AC connection have to be commanded in a regular way. In other terms, the submodules involved in a such a commutation path cannot be controlled as a derated submodule as illustrated in FIG. 15 to FIG. 17.

Such a commutation path allows for actively adjusting the DC link midpoint voltage in regard to the AC voltage midpoint through control of the submodules.

At least one of the submodules involved in the other commutation path is commanded as a derated submodule.

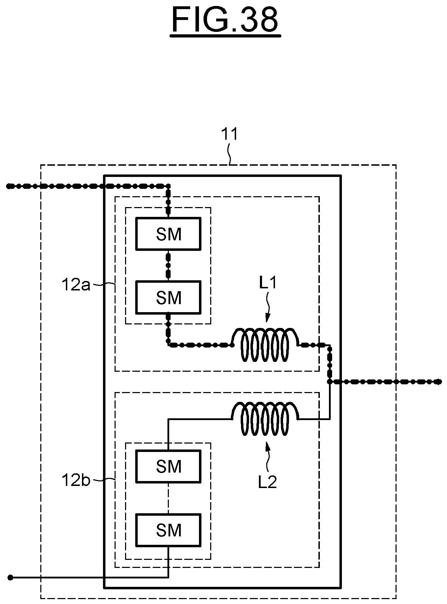

FIG. 38 to FIG. 39 illustrate the different conducting paths for achieving two voltage levels when the motor-end (ME) converter operates in a 2L converter mode, the motor-end (ME) converter being the MMC illustrated by FIG. 8.

When the DC voltage required to generate the AC voltage is equal to Vdc, the motor-end converter 11 is commanded to connect the first DC connection of DC link 40. The DC voltage then results in a Vdc AC voltage fed to the motor.

In order to do so, the submodules comprised in the first branch 12a are commanded in a conducting ("on") state while the submodules comprised in the second branch 12b are commanded in a non-conducting ("off") state.

A conducting path between the first DC connection and the AC connection is then created through the submodules comprised in the first branch 12a. FIG. 38 illustrates the conducting path as a line with a dash-dot pattern.

When the DC voltage required to generate the AC voltage is equal to -Vdc, the motor-end converter 11 is commanded to connect the second DC connection of DC link 40. The DC voltage then results in a -Vdc AC voltage fed to the motor.

In order to do so, the submodules comprised in the second branch 12b are commanded in a conducting ("on") state while the submodules comprised in the first branch 12a are commanded in a non-conducting ("off") state.

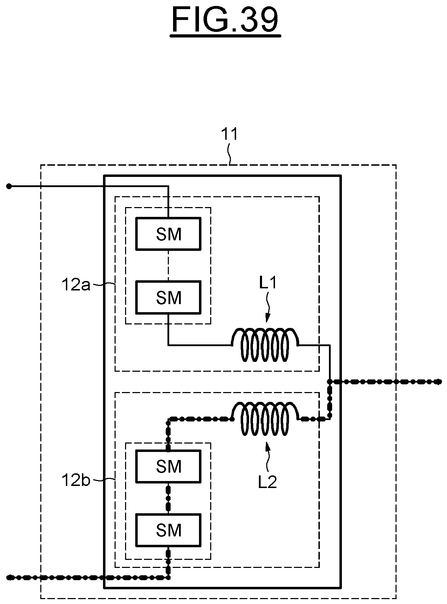

A conducting path between the first DC connection and the AC connection is then created through the submodules comprised in the second branch 12b. FIG. 39 illustrates the conducting path as a line with a dash-dot pattern.

The AC-DC-AC converter is advantageous thanks to its topology shared by two different control schemes, 3L ANPC mode/2L mode on one hand and 3L/2L plus MMC Chopper mode on another hand, without the need of added components. Switching between one of the two modes is achieved by adding or removing constrains at the submodule level.

The AC-DC-AC converter is therefore able to change its control scheme on the fly to benefit from the unique advantages of either the 3L ANPC mode/2L mode or the 3L/2L plus MMC Chopper mode. A single topology can also be programmed or reprogrammed to achieve one or another control scheme, before or after sale.

As an HMMR is used as a front-end converter, the AC-DC-AC converter also provides a constant DC link voltage generated and maintained by the front-end converter and a variable chain link DC voltage generated by the motor-end HMMC converter operating either in MMC plus DC/DC chopper mode or in 3L/2L mode. The variable chain link DC voltage is proportional to motor speed or frequency with a constant DC current during low frequency motor startup operations.

### Parts list:

1: AC-DC-AC converter
2: AC source
3: motor
4: DC link
4a,4b: DC link capacitances
5a,5b: controllers
10: front-end converter
11: motor-end converter
11a,11b,11c,11d: leg of a motor-end converter
12a,12b: branch of a motor-end converter
SW1, SW 2, SW 3, SW 4, SW 5, SW 6: controllable switches
L1,L2: inductors
SM: submodule
SW1_SM,SW2_SM,SW3_SM,SW4_SM: submodule controllable switches
C_SM: submodule capacitance

## Claims

1. Method for controlling an AC-DC-AC converter (1) for delivering power to an electric motor from a power source (2), the AC-DC-AC converter comprising a front-end converter (10) and a motor-end converter (11) connected through a DC link (4), the front-end converter operating so that the DC link voltage is constant, the front-end converter (10) is a hybrid modular multilevel rectifier, the motor-end converter (11) comprising at least two submodules, a submodule being a half bridge submodule or a full bridge submodule, a half bridge submodule comprising a first connection connected to a second end of a first controllable switch (SW1_SM) and to a first end of a second controllable switch (SW2_SM), a second connection connected to the second end of the second controllable switch (SW2_SM), a capacitor (C_SM) connected on one hand to the first end of the first controllable switch (SW1_SM) and on another hand to both the second connection and the second end of the second controllable switch (SW2_SM), a full bridge submodule comprising a first connection connected to a second end of a first controllable switch (SW1_SM) and to a first end of a second controllable switch (SW2_SM), a second connection connected to a second end of a third controllable switch (SW3_SM) and to a first end of a fourth controllable switch (SW4_SM), a capacitor (C_SM) being connected on one hand to both first ends of the first controllable switch (SW1_SM) and third controllable switch (SW3_SM), and on another hand to both second ends of the second controllable switch (SW2_SM) and fourth controllable switch (SW4_SM), wherein it comprises the following steps in order to control the AC-DC-AC converter in a 3L ANPC mode when the motor-end converter (11) is a hybrid modular multilevel converter or in a 2L mode when the motor-end converter (11) is a hybrid modular multilevel converter or modular multilevel converter:
a. controlling the motor-end converter in order to generate an AC voltage equal to one of at least two voltages among a first voltage, a second voltage, a third voltage, a fourth voltage and a fifth voltage according to the voltage required by the motor,
b. in order to generate an AC voltage, forming a commutation path connecting a DC connection to the AC connection, commanding at least one submodule of the motor-end converter (11) comprised in said commutation path to operate as a derated submodule,
c. in order to have a full-bridge submodule controlled as a derated submodule, commanding the second controllable switch (SW2_SM) and the fourth controllable switch (SW4_SM) to be non-conducting, and commanding the first controllable switch (SW1_SM) and the third controllable switch (SW3_SM) to be conducting, or commanding the first controllable switch (SW1_SM) and the third controllable switch (SW3_SM) to be non-conducting, and commanding the second controllable switch (SW2_SM) and the fourth controllable switch (SW4_SM) to be conducting,
d. in order to have a half-bridge submodule controlled to be conducting as a derated submodule, commanding the first controllable switch (SW2_SM) to be non-conducting and commanding the second controllable switch (SW2_SM) to be conducting.

2. Method for controlling an AC-DC-AC converter (1) according to claim 1, wherein another commutation path connecting a DC connection to the AC connection, or a commutation path connecting two DC connections is formed in order to actively control the DC link neutral point, none of the submodules of the motor-end converter (11) comprised in said other commutation path is commanded to operate as a derated submodule.

3. Method for controlling an AC-DC-AC converter according to claim 1 or 2, wherein the hybrid modular multilevel converter comprises at least one leg (11a), each leg (11a) being connected to an AC connection and to three DC connections, each leg (11a) comprising at least four controllable switches (SW1,SW2,SW3,SW4) of a plurality of controllable switches connected in series and two branches (12a,12b), a first end of a first controllable switch (SW1) connected to a first DC connection, a first end of a second controllable switch (SW2) connected to a second end of the first controllable switch (SW1), the second end of the second controllable switch (SW2) connected to a second DC connection, a first end of a third controllable switch (SW3) connected to a second end of the second controllable switch (SW2) and to the second DC connection, a first end of a fourth controllable switch (SW4) connected to a second end of the third controllable switch (SW3), a second end of the fourth controllable switch (SW4) is connected to the third DC connection, the first branch (12a) comprising at least one submodule (SM) of a plurality of submodules connected in series, the first branch (12a) being connected by a first submodule (SM) to a second end of the first controllable switch (SW1) and to a first end of the second controllable switch (SW2), the first branch (12a) being connected to the AC connection, the second branch (12b) comprising at least one submodule (SM) a plurality of submodules connected in series, the second branch (12b) being connected by a first submodule (SM) to a second end of the third controllable switch (SW3) and to a first end of the fourth controllable switch (SW4), the second branch (12b) being connected to the AC connection.

4. Method for controlling an AC-DC-AC converter according to claim 1 or 2, wherein the hybrid modular multilevel converter comprises at least one leg (11b), each leg being connected to an AC connection and to three DC connections, each leg (11b) comprising at least two pairs of controllable switches (SW1, SW2, SW4, SW5) of a plurality of pairs of controllable switches connected in series with opposite polarities and at least two controllable switches (SW3, SW6) of a plurality of controllable switches connected in series, a first end of a first controllable switch (SW1) of the first pair of controllable switches (SW1, SW2) connected to a first DC connection, a second end of a second controllable switch (SW2) of the first pair of controllable switches (SW1, SW2) is connected to the second end of the first controllable switch (SW1) of the first pair of controllable switches (SW1, SW2), a first end of a third controllable switch (SW3) is connected to the first end of the second controllable switch (SW2) of the first pair of controllable switches (SW1, SW2), the second end of the third controllable switch (SW3) is connected to the AC connection, a first end of a fourth controllable switch (SW4) of the second pair of controllable switches (SW4, SW5) is connected to a third DC connection, a second end of a fifth controllable switch (SW5) of the second pair of controllable switches (SW4, SW5) is connected to a second end of the fourth controllable switch (SW4) of the second pair of controllable switches (SW4, SW5), a second end of a sixth controllable switch (SW6) is connected to the first end of the fifth controllable switch (SW5) of the second pair of controllable switches (SW4, SW5), a first end of the sixth controllable switch (SW6) is connected to the AC connection, the first branch (12a) comprising at least one submodule (SM) of a plurality of submodules connected in series, the first branch (12a) being connected by a first submodule (SM) to the first end of the second controllable switch (SW2) of the first pair of controllable switches (SW1, SW2) and to the first end of the third controllable switch (SW3), the first branch (12a) being connected to the second DC connection, the second branch (12b) comprising at least one submodule (SM) of a plurality of submodules connected in series, the second branch (12b) being connected by a first submodule SM to the first end of the fifth controllable switch (SW5) of the second pair of controllable switches (SW4, SW5) and to the second end of the sixth controllable switch (SW6), the second branch (12b) being connected to the second DC connection.

5. Method for controlling an AC-DC-AC converter according to claim 1 or 2, wherein the hybrid modular multilevel converter comprises at least one leg (11c), each leg (11c) being connected to an AC connection and to three DC connections, each leg (11c) comprises at least four controllable switches (SW1,SW2,SW3,SW4) of a plurality of switches connected in series and two branches (12a,12b), a first branch (12a) comprising at least one submodule (SM) of a plurality of submodules connected in series, the first branch (12a) being connected to the first DC connection, a first submodule (SM) of the first branch (12a) being connected to a first end of a first controllable switch (SW1) and to a first end of a third controllable switch (SW3), a second branch (12b) comprising at least one submodule (SM) of a plurality of submodules connected in series, the second branch (12b) being connected to the third DC connection, a first submodule (SM) of the second branch (12b) being connected to the second end of the second controllable switch (SW2) and to the second end of the fourth controllable switch (SW4), the second end of the first controllable switch (SW1) and the first end of the second controllable switch (SW2) being connected to the second DC connection, the second end of the third controllable switch (SW3) and the first end of the fourth controllable switch (SW4) being connected to the AC connection.

6. Method for controlling an AC-DC-AC converter according to claim 3, wherein, in order to generate an AC voltage equal to the first voltage, the first controllable switch (SW1) and the third controllable switch (SW3) are commanded in a conducting ("on") state while the second controllable switch (SW2) and the fourth controllable switch SW4 are commanded in a non-conducting ("off") state.

7. Method for controlling an AC-DC-AC converter according to claim 3, wherein, in order to generate an AC voltage equal to the second voltage, the second controllable switch (SW2) and the third controllable switch (SW3) are commanded in a conducting ("on") state while the first controllable switch (SW1) and the fourth controllable switch (SW4) are commanded in a non-conducting ("off") state.

8. Method for controlling an AC-DC-AC converter according to claim 3, wherein, in order to generate an AC voltage equal to the third voltage, the second controllable switch (SW2) and the fourth controllable switch (SW4) are commanded in a conducting ("on") state while the first controllable switch (SW1) and the third controllable switch (SW3) are commanded in a non-conducting ("off") state.

9. Method for controlling an AC-DC-AC converter according to claim 4, wherein, in order to generate an AC voltage equal to the first voltage, the first controllable switch (SW1), the second controllable switch (SW2), the third controllable switch (SW3) and the sixth controllable switch (SW6) are commanded in a conducting ("on") state while the fourth controllable switch (SW4) and the fifth controllable switch (SW5) are commanded in a non-conducting ("off") state.

10. Method for controlling an AC-DC-AC converter according to claim 4, wherein, in order to generate an AC voltage equal to second voltage, the first controllable switch (SW1), the second controllable switch (SW2), the fourth controllable switch (SW4) and the fifth controllable switch (SW5) are commanded in a non-conducting ("off") state while the third controllable switch (SW3) and the sixth controllable switch (SW6) are commanded in a conducting ("on") state.

11. Method for controlling an AC-DC-AC converter according to claim 4, wherein, in order to generate an AC voltage equal to the third voltage, the third controllable switch (SW3), the fourth controllable switch (SW4), the fifth controllable switch (SW5) and the sixth controllable switch (SW6) are commanded in a conducting ("on") state while the first controllable switch (SW1) and the second controllable switch (SW2) are commanded in a non-conducting ("off") state.

12. Method for controlling an AC-DC-AC converter according to claim 4, wherein, in order to generate an AC voltage equal to the first voltage, the first controllable switch (SW1), the second controllable switch (SW2), the third controllable switch (SW3), the fourth controllable switch (SW4) and the fifth controllable switch (SW5) are commanded in a conducting ("on") state while the sixth controllable switch (SW6) is commanded in a non-conducting ("off") state.

13. Method for controlling an AC-DC-AC converter according to claim 4, wherein, in order to generate an AC voltage equal to the third voltage, the first controllable switch (SW1), the second controllable switch (SW2), the fourth controllable switch (SW4), the fifth controllable switch (SW5) and the sixth controllable switch (SW6) are commanded in a conducting ("on") state while the third controllable switch (SW3) is commanded in a non-conducting ("off") state.

14. Method for controlling an AC-DC-AC converter according to claim 5, wherein, in order to generate an AC voltage equal to the first voltage, the second controllable switch (SW2) and the third controllable switch (SW3) are commanded in a conducting ("on") state while the first controllable switch (SW1) and the fourth controllable switch (SW4) are commanded in a non-conducting ("off") state.

15. Method for controlling an AC-DC-AC converter according to claim 5, wherein, in order to generate an AC voltage equal to the second voltage, the first controllable switch (SW1), the second controllable switch (SW2), the third controllable switch (SW3) and the fourth controllable switch (SW4) are commanded in a conducting ("on") state.

16. Method for controlling an AC-DC-AC converter according to claim 5, wherein, in order to generate an AC voltage equal to the third voltage, the first controllable switch (SW1) and the fourth controllable switch (SW4) are commanded in a conducting ("on") state while the second controllable switch (SW2) and the third controllable switch (SW3) are commanded in a non-conducting ("off") state.

17. Method for controlling an AC-DC-AC converter according to claim 1 or 2, wherein the modular multilevel converter comprises at least one leg (11d) connected to an AC connection and to two DC connections of an MMC-specific DC link (40), each leg comprises a first branch (12a) and a second branch (12b), each branch (12a,12b) comprising at least one submodule (SM) of a plurality of submodules in series with an inductor (L1,L2), each branch (12a,12b) being connected to the AC connection through the inductor (L1,L2) and to the DC connection through a submodule (SM), the method comprising the following steps, in order to generate an AC voltage equal to the fourth voltage, the MMC submodules comprised in the first branch (12a) are commanded in a conducting ("on") state while the submodules comprised in the second branch (12b) are commanded in a non-conducting ("off") state.

18. Method for controlling an AC-DC-AC converter according to claim 1 or 2, wherein the modular multilevel converter comprises at least one leg (11d) connected to an AC connection and to two DC connections of an MMC-specific DC link (40), each leg comprises a first branch (12a) and a second branch (12b), each branch (12a,12b) comprising at least one submodule (SM) of a plurality of submodules in series with an inductor (L1,L2), each branch (12a,12b) being connected to the AC connection through the inductor (L1,L2) and to the DC connection through a submodule (SM), the method comprising the following steps, in order to generate an AC voltage equal to the fifth voltage, the submodules comprised in the second branch (12b) are commanded in a conducting ("on") state while the submodules comprised in the first branch (12a) are commanded in a non-conducting ("off") state.

19. Method for controlling an AC-DC-AC converter according to any of claims 1 to 5, wherein each branch (12a,12b) comprises an inductor (L1,L2) connected on one-end in series with the submodules in series in each respective branch (12a,12b), and the other-end to the AC connection, the second DC connection, and to the first and third DC connections respectively.

20. Method for controlling an AC-DC-AC converter according to claim 4, wherein all the submodules are half-bridge submodules.

21. Method for controlling an AC-DC-AC converter according to either claims 3 or 5, wherein all the submodules are full-bridge submodules.

22. Method for controlling an AC-DC-AC converter according to any of claims 3 to 5, wherein a submodule is a half-bridge submodule or a full-bridge submodule.
